(19) Europäisches Patentamt
European Patent Office
Office européen des brevets

(11) EP 4 787 861 A1

(12) EUROPEAN PATENT APPLICATION
published in accordance with Art. 153(4) EPC

(43) Date of publication:
05.08.2026 Bulletin 2026/32

(21) Application number: 24873006.1

(22) Date of filing: 26.09.2024

(51) International Patent Classification (IPC):
H04N 19/597 (2014.01)    H04N 19/60 (2014.01)
H04N 19/124 (2014.01)    H04N 19/13 (2014.01)
H04N 19/184 (2014.01)

(52) Cooperative Patent Classification (CPC):
H04N 19/124; H04N 19/13; H04N 19/184;
H04N 19/597; H04N 19/60

(86) International application number:
PCT/KR2024/014650

(87) International publication number:
WO 2025/071298 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.09.2023 US 202363540690 P

(71) Applicant: LG Electronics Inc.
Seoul 07336 (KR)

(72) Inventors:
• PARK, Hanje
  Seoul 06772 (KR)
• KIM, Mintae
  Seoul 02553 (KR)
• BYEON, Joohyung
  Seoul 01891 (KR)
• SIM, Donggyu
  Seoul 02874 (KR)

(74) Representative: Jung, Minkyu et al
Wuesthoff & Wuesthoff
Patentanwälte und Rechtsanwalt PartG mbB
Schweigerstraße 2
81541 München (DE)

(54) **MESH DATA TRANSMISSION DEVICE, MESH DATA TRANSMISSION METHOD, MESH DATA RECEPTION DEVICE, AND MESH DATA RECEPTION METHOD**

(57) A mesh data decoding method, according to the embodiments, may comprise the steps of: receiving a bitstream including mesh data; and decoding the mesh data. A mesh data encoding method, according to the embodiments, may comprise the steps of: encoding mesh data; and transmitting a bitstream including the mesh data.

FIG. 1

## Description

[Technical Field]

Embodiments provide a method for providing point cloud content to provide a user with various services such as virtual reality (VR), augmented reality (AR), mixed reality (MR), and self-driving services.

[Background Art]

A point cloud is a set of points in a three-dimensional (3D) space. It is difficult to generate point cloud data because the number of points in the 3D space is large.

A large throughput is required to transmit and receive data of a point cloud.

[Disclosure]

[Technical Problem]

An object of the present disclosure devised to solve the above-described problems is to provide a point cloud data transmission device, a point cloud data transmission method, a point cloud data reception device, and a point cloud data reception method for efficiently transmitting and receiving a point cloud.

Another object of the present disclosure is to provide a point cloud data transmission device, a point cloud data transmission method, a point cloud data reception device, and a point cloud data reception method for addressing latency and encoding/decoding complexity.

Embodiments are not limited to the above-described objects, and the scope of the embodiments may be extended to other objects that can be inferred by those skilled in the art based on the entire contents of the present disclosure.

[Technical Solution]

To achieve these objects and other advantages, a method of transmitting mesh data according to embodiments may include encoding mesh data, and transmitting a bitstream containing the mesh data. A method of receiving mesh data according to embodiments may include receiving a bitstream containing mesh data, and decoding the mesh data.

[Advantageous Effects]

The point cloud data transmission method, the point cloud data transmission device, the point cloud data reception method, and the reception device according to embodiments may provide a quality point cloud service.

The point cloud data transmission method, point cloud data transmission device, point cloud data reception method, and point cloud data reception device according to embodiments may achieve various video codec methods.

The point cloud data transmission method, point cloud data transmission device, point cloud data reception method, and point cloud data reception device according to embodiments may provide universal point cloud content such as an autonomous driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:

FIG. 1 illustrates a system for providing dynamic mesh content according to embodiments;

FIG. 2 illustrates a V-MESH compression method according to embodiments;

FIG. 3 illustrates pre-processing in V-MESH compression according to embodiments;

FIG. 4 illustrates a mid-edge subdivision method according to embodiments;

FIG. 5 illustrates a displacement generation process according to embodiments;

FIG. 6 illustrates an intra-frame encoding process in a V-MESH compression method according to embodiments;

FIG. 7 illustrates an inter-frame encoding process for V-MESH data according to embodiments;

FIG. 8 illustrates a lifting transform process for displacements according to embodiments;

FIG. 9 illustrates a process of packing transform coefficients into a 2D image according to embodiments;

FIG. 10 illustrates an attribute transfer process in a V-MESH compression method according to embodiments;

FIG. 11 illustrates an intra-frame decoding process in a V-MESH compression method according to embodiments;

FIG. 12 illustrates V-MESH compression inter frame decoding process according to embodiments;

FIG. 13 illustrates a point cloud data transmission device according to embodiments;

FIG. 14 illustrates a point cloud data reception device according to embodiments;

FIG. 15 illustrates a dynamic mesh encoder according to embodiments;

FIG. 16 illustrates a displacement vector encoder according to embodiments;

FIG. 17 illustrates a displacement vector encoder according to embodiments;

FIG. 18 illustrates a lifting transform predictor and a lifting transform updater according to embodiments;

FIG. 19 illustrates an adaptive lifting transform update method according to embodiments;

FIG. 20 illustrates adaptive weights according to embodiments;

FIG. 21 illustrates adaptive weights according to embodiments;

FIG. 22 illustrates a dynamic mesh decoder according to embodiments;

FIG. 23 illustrates an inverse displacement vector coordinate transformer according to embodiments;

FIG. 24 illustrates a displacement vector decoder according to embodiments;

FIG. 25 illustrates an inverse lifting transform updater and an inverse lifting transform predictor according to embodiments;

FIG. 26 illustrates lifting transform parameters according to embodiments;

FIG. 27 illustrates a mesh data encoding method according to embodiments; and

FIG. 28 illustrates a mesh data decoding method according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

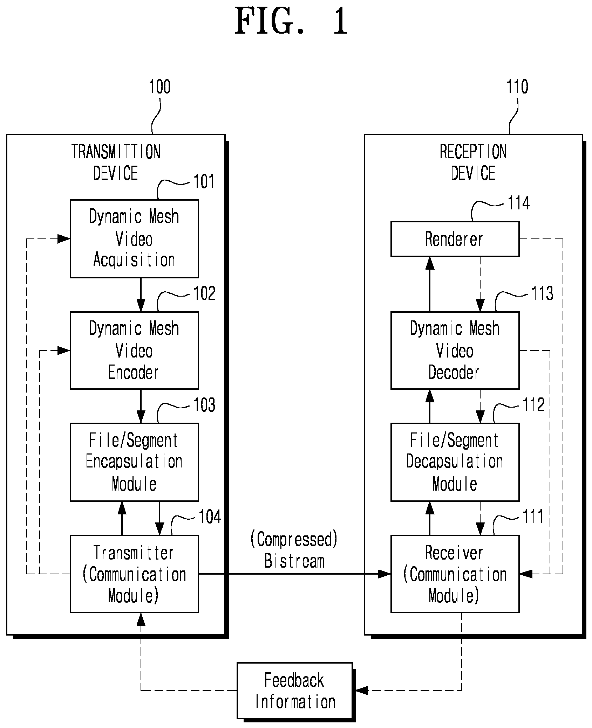

FIG. 1 illustrates a system for providing dynamic mesh content according to embodiments.

The system in FIG. 1 includes a point cloud data transmission device 100 and a point cloud data reception device 110. The point cloud data transmission device may include a dynamic mesh video acquisition unit (or part) 101, a dynamic mesh video encoder 102, a file/segment encapsulator 103, and a transmitter 104. The point cloud data reception device 110 may include a receiver 111, a file/segment decapsulator 112, a dynamic mesh video decoder 113, and a renderer 114. Each component in FIG. 1 may correspond to hardware, software, a processor, and/or a combination thereof. In the following description, a point cloud data transmission device according to embodiments may be interpreted as referring to the transmission device 100 or the dynamic mesh video encoder (hereinafter, encoder) 102. A point cloud data reception device according to embodiments may be interpreted as referring to the reception device 110 or the dynamic mesh video decoder (hereinafter, decoder) 113.

The system of FIG. 1 may perform video-based dynamic mesh compression and decompression.

With advancements in 3D capture, modeling, and rendering, users are allowed to access 3D content in various forms, such as AR, XR, metaverse, and holograms, across multiple platforms and devices. 3D content is increasingly becoming sophisticated and realistic in its representation of objects to provide immersive experiences for users. However, this requires a substantial amount of data for generation and use of 3D models. Among the various types of 3D content, 3D meshes are widely used for efficient data utilization and realistic object representation. Embodiments include a series of processing steps in a system that uses mesh content.

First, the method of compressing dynamic mesh data starts with the Video-based point cloud compression (V-PCC) standard technique. Point cloud data is data that has color information in the coordinates (X, Y, Z) of vertices. Mesh data refers to vertex information including inter-vertex connectivity information. Content may be originally created in the form of mesh data. Connectivity information may be added to point cloud data, and the point cloud data may be transformed into mesh data.

Currently, the MPEG standards group defines two data types for dynamic mesh data: Category 1 of mesh data having a texture map as color information, and Category 2 of mesh data having vertex colors as color information.

Mesh coding standards for Category 1 data are currently underway, and standardization for Category 2 data is expected to follow. The overall process for providing a mesh content service may include acquisition, encoding, transmission, decoding, rendering, and/or feedback processes, as shown in FIG. 1.

To provide mesh content services, 3D data acquired through multiple cameras or special cameras may be processed into a mesh data type through a series of steps to generate a video. The generated mesh video may be transmitted through a series of operations, and the receiving side may process the received data back into a mesh video for rendering. Through this process, the mesh video may be provided to the user, allowing the user to utilize the mesh content interactively according to their intent.

A mesh compression system may include a transmission device and a reception device. The transmission device may encode the mesh video to output a bitstream, which may be delivered to the reception device over a digital storage medium or a network in the form of file or streaming (streaming segments). The digital storage medium may include various storage media such as USB, SD, CD, DVD, Blu-ray, HDD, and SSD.

The transmission device may schematically include a mesh video acquisition unit, a mesh video encoder, and a transmitter. The reception device may schematically include a receiver, a mesh video decoder, and a renderer. The encoder may be referred to as a mesh video/image/picture/frame encoding device. The decoder may be referred to as a mesh video/image/picture/frame decoding device. A transmitter may be included in the mesh video encoder, and a receiver may be included in the mesh video decoder. The renderer may include a display, and the renderer and/or display may be configured as separate devices or external components. The transmission device and reception device may further include separate internal or external modules/units/components for the feedback process.

Mesh data represents the surface of an object using multiple polygons. Each polygon is defined by vertices in 3D space and connectivity information indicating how the vertices are connected. Additionally, vertex attributes such as color and normal vectors may be included in the data. Mapping information, which allows the surface of the mesh to be mapped onto a 2D plane, may also be included in the attributes of the mesh. The mapping is generally described using a set of parametric coordinates related to the vertices of the mesh, referred to as UV coordinates or texture coordinates. A mesh contains a 2D attribute map, which may be used to store high-resolution attribute information such as texture, normal, and displacement.

The mesh video acquisition unit may include processing 3D object data acquired through a camera or the like into a mesh data type having the attributes described above through a series of operations and generating a video composed of the mesh data. In the mesh video, the attributes of the mesh, such as vertices, polygons, connectivity between vertices, color, and normal, may change over time. A mesh video with attributes and connectivity information that change over time is referred to as a dynamic mesh video.

The mesh video encoder may encode an input mesh video into one or more video streams. A video may contain multiple frames, each of which may correspond to a still image/picture. In the present disclosure, the mesh video may include mesh images/frames/pictures. The term "mesh video" may be used interchangeably with mesh images/frames/pictures. The mesh video encoder may perform a Video-based Dynamic Mesh (V-Mesh) compression procedure. For compression and coding efficiency, the mesh video encoder may perform a series of procedures such as prediction, transformation, quantization, and entropy coding. Encoded data (encoded video/image information) may be output in the form of a bitstream.

The encapsulation processor (file/segment encapsulation module) may encapsulate encoded mesh video data and/or mesh video-related metadata in the form of a file or the like. The mesh video-related metadata may be received from a metadata processor. The metadata processor may be included in the mesh video encoder, or may be configured as a separate component/module. The encapsulation processor may encapsulate the data into a file format such as ISOBMFF or process the same into forms such as DASH segments. According to embodiments, the encapsulation processor may include the mesh video-related metadata in the file format. For example, the mesh video metadata may be included in boxes at various levels in the ISOBMFF file format, or as data on separate tracks in the file. In some embodiments, the encapsulation processor may encapsulate the mesh video-related metadata into a file.

The transmission processor may apply processing to the encapsulated mesh video data for transmission based on the file format. The transmission processor may be included in the transmitter or implemented as a separate component/module. The transmission processor may process the mesh video data according to any transmission protocol. The processing for transmission may include processing for delivery over a broadcast network and processing for delivery over a broadband. In some embodiments, the transmission processor may receive mesh video-related metadata from the metadata processor, as well as the mesh video data, and process the same for transmission.

The transmitter may transmit the encoded video/image information or data output in bitstream form to the receiver of the reception device over a digital storage medium or network in the form of a file or streaming. The digital storage medium may include various storage media such as USB, SD, CD, DVD, Blu-ray, HDD, and SSD. The transmitter may include an element to generate a media file through a predetermined file format, and may include an element for transmission over a broadcast/communication network. The receiver may extract the bitstream and deliver the same to a decoding device.

The receiver may receive the mesh video data transmitted by the mesh video transmission device. Depending on the channel for transmission, the receiver may receive the mesh video data over a broadcast network or a broadband network, or may receive the mesh video data over a digital storage medium.

The reception processor may perform processing on the received mesh video data according to the transmission protocol. The reception processor may be included in the receiver, or may be configured as a separate component/module. To correspond to the processing performed for transmission on the transmitting side, the reception processor may perform the reverse process to the operations of the transmission processor described above. The reception processor may deliver the acquired mesh video data to the decapsulation processor and the acquired mesh video-related metadata to the metadata parser. The mesh video-related metadata acquired by the reception processor may be in the form of a signaling table.

The decapsulation processor (file/segment decapsulation module) may decapsulate mesh video data in the form of files received from the reception processor. The decapsulation processor may decapsulate the files according to ISOBMFF or the like to acquire a mesh video bitstream or mesh video-related metadata (metadata bitstream). The acquired mesh video bitstream may be delivered to the mesh video decoder, and the acquired mesh video-related metadata (metadata bitstream) may be delivered to the metadata processor. The mesh video bitstream may include metadata (metadata bitstream). The metadata processor may be included in the mesh video decoder, or may be configured as a separate component/module. The mesh video-related metadata acquired by the decapsulation processor may be in the form of boxes or tracks in the file format. The decapsulation processor may receive metadata required for decapsulation from the metadata processor, when necessary. The mesh video-related metadata may be delivered to the mesh video decoder for use in the mesh video decoding procedure, or to the renderer for use in the mesh video rendering procedure.

The mesh video decoder may receive the input bitstream and perform an operation corresponding to the operation of the mesh video encoder to decode the video/images. The decoded mesh video/images may be displayed through the display of the renderer. The user may view all or a portion of the rendered result through a VR/AR display, a general display, or the like.

The feedback process may include transmitting various kinds of feedback information that may be acquired during the rendering/display operation to the transmitting side or to the decoder on the receiving side. The feedback process may provide interactivity in consuming the mesh video. In some embodiments, the feedback process may include transmitting head orientation information, viewport information indicative of an area the user is currently viewing, and the like. In some embodiments, the user may interact with objects implemented in the VR/AR/MR/autonomous driving environment. In this case, the information related to the interaction may be delivered to the transmitting side or service provider during the feedback process. In some embodiments, the feedback process may be skipped.

The head orientation information may refer to information about the user's head position, angle, movement, etc. Based on this information, information about the area that the user is currently viewing within the mesh video, i.e., viewport information, may be calculated.

The viewport information may be information about the area in the mesh video that the user is currently viewing. Gaze analysis may be performed based on this information to determine how the user consumes the mesh video, how long the user is looking at a particular area of the mesh video, and the like. The gaze analysis may be performed on the receiving side and the result may be delivered to the transmitting side through a feedback channel. A device, such as a VR/AR/MR display, may extract a viewport area based on the user's head position/orientation, the vertical or horizontal FOV supported by the device, etc.

In some embodiments, the feedback information described above may not only be delivered to the transmitter, but may also be consumed on the receiving side. In other words, operations such as decoding and rendering may be performed on the receiving side based on the feedback information described above. For example, based on the head orientation information and/or viewport information, only the mesh video for the area currently being viewed by the user may be preferentially decoded and rendered.

The present disclosure relates to dynamic mesh video compression as described above. The methods/embodiments disclosed herein may be applied to the standard of Video-based Dynamic mesh compression (V-Mesh) of the Moving Picture Experts Group (MPEG) or any next-generation video/image coding standard. Dynamic mesh video compression is a method for processing mesh connectivity information and attributes that change over time. It may perform lossy and lossless compression for a variety of applications such as real-time communications, storage, free-viewpoint video, and AR/VR.

The dynamic mesh video compression method described below is based on the V-mesh method of the MPEG.

In the present disclosure, a picture/frame may generally refer to a unit that represents one image at a specific time.

A pixel or pel may refer to the smallest unit that constitutes a picture (or video). Additionally, the term "sample" may be used as a term corresponding to a pixel. A sample may generally indicate a pixel or the value of the pixel in general. It may indicate only the pixel/pixel value of the luma component, or may indicate only the pixel/pixel value of the chroma component, or may indicate only the pixel/pixel value of the depth component.

A unit may represent the basic unit of image processing. The unit may include at least one of a specific area of the picture and information related to the region. In some cases, the term unit may be used interchangeably with terms such as block or area. In general, an MxN block may include a set (or array) of samples (or a sample array) or transform coefficients composed of M columns and N rows.

The encoding process of FIG. 1 is performed as follows.

The compression method of Video-based dynamic mesh compression (V-Mesh) may provide a method of compressing dynamic mesh video data based on 2D video codecs such as High Efficiency Video Coding (HEVC) and Versatile Video Coding (VVC). In the V-Mesh compression process, the following data is received as input and compressed.

Input mesh: Includes 3D coordinates (geometry) of the vertices comprising the mesh, normal information about each vertex, mapping information for mapping the surface of the mesh to a 2D plane, and connectivity between the vertices constituting the surface. The surface of the mesh may be represented by triangles or other polygons, and the connectivity information between the vertices constituting the surface is stored according to a predetermined shape. The input mesh may be stored in the OBJ file format.

Attribute map (Texture map is also used interchangeably hereafter): Contains information about the attributes (color, normals, displacements, etc.) of a mesh and stores the data in the form of a mapping of the surface of the mesh onto a 2D image. Mapping indicating which part (surface or vertex) of the mesh corresponds to each piece of data in the attribute map is based on the mapping information contained in the input mesh. Since the attribute map has data about each frame of the mesh video, it may also be referred to as an attribute map video (or simply as attributes). The attribute map in the V-Mesh compression method mainly contains the color information about the mesh and is stored in an image file format (PNG, BMP, etc.).

Material library file: Contains the material attribute information used in the mesh, specifically the information that links the input mesh to the corresponding attribute map. It is stored in the Wavefront Material Template Library (MTL) file format.

In the V-Mesh compression method, the following data and information may be generated through the compression process.

Base mesh: Represents the objects in the input mesh using the minimum vertices determined according to the user's criteria by decimating the input mesh through the pre-processing process.

Displacement: Displacement information used to represent the input mesh as similarly as possible using the base mesh, expressed in 3D coordinates.

Atlas information: Metadata needed to reconstruct a mesh using the base mesh, displacement, and attribute map information. It may be generated and utilized in sub-units (sub-mesh, patch, etc.) that constitute the mesh.

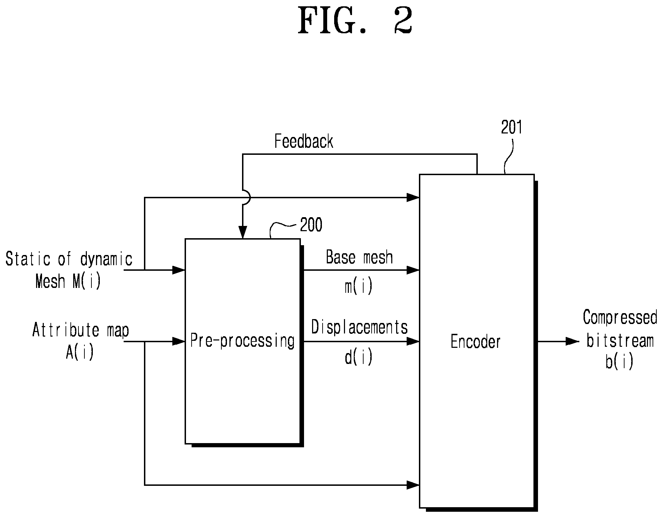

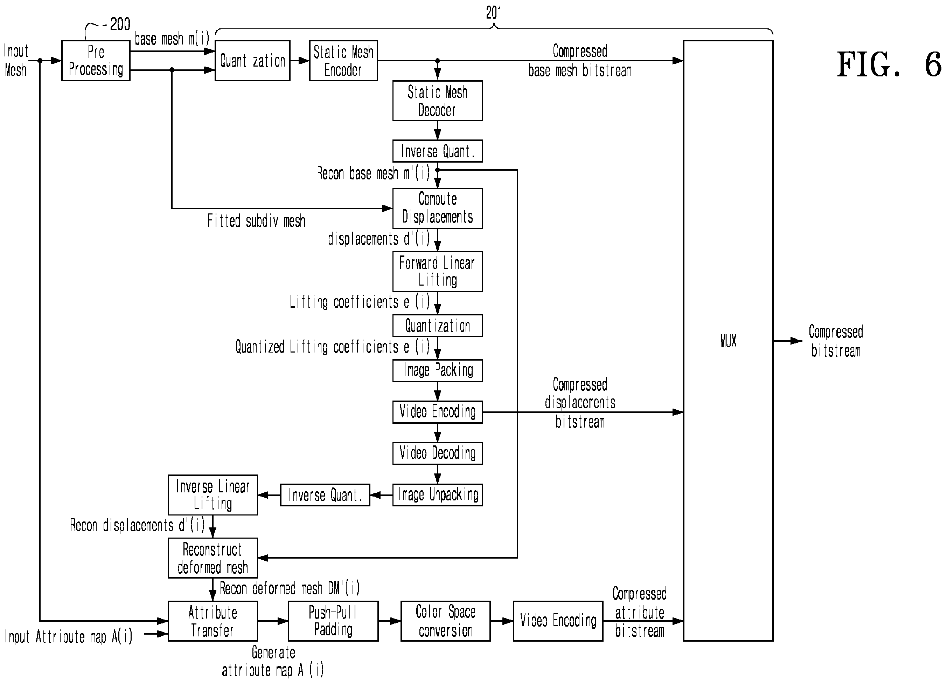

A method of encoding mesh position information (or vertex) is described with reference to FIGS. 2 to 7, and a method of reconstructing mesh position information to encode attribute information (attribute map) is described with reference to FIGS. 6 to 10 and the like.

FIG. 2 illustrates a V-MESH compression method according to embodiments.

FIG. 2 illustrates the encoding process of FIG. 1, wherein the encoding process may include a pre-processing process and an encoding process. The encoder of FIG. 1 may include a pre-processor 200 and an encoder 201, as shown in FIG. 2. The transmission device of FIG. 1 may be broadly referred to as an encoder, and the dynamic mesh video encoder of FIG. 1 may be referred to as an encoder. The V-Mesh compression method may include pre-processing and encoding 201, as shown in FIG. 2. The pre-processor of FIG. 2 may be positioned at the front end of the encoder of FIG. 2. The pre-processor and encoder of FIG. 2 may be referred to as a single encoder.

The pre-processor may receive a static dynamic mesh and/or an attribute map. The pre-processor may generate a base mesh and/or displacements through pre-processing. The pre-processor may receive feedback information from the encoder, and may generate the base mesh and/or displacements based on the feedback information.

The encoder may receive the base mesh, the displacements, the static dynamic mesh, and/or the attribute map. The encoder may encode the mesh-related data to generate a compressed bitstream.

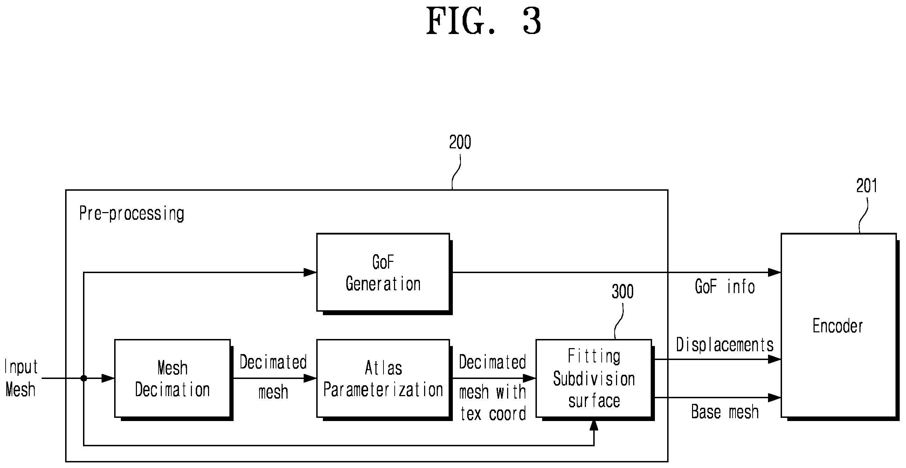

FIG. 3 illustrates pre-processing in V-MESH compression according to embodiments.

FIG. 3 illustrates the configuration and operation of the pre-processor of FIG. 2.

FIG. 3 illustrates the process of performing pre-processing on the input mesh. The pre-processing 200 may include four operations: 1) Group of Frame (GoF) generation, 2) mesh decimation, 3) UV parameterization, and 4) fitting subdivision surface (300). The pre-processor 200 may receive input mesh, generate displacements and/or a base mesh, and deliver the same to the encoder 201. The pre-processor 200 may deliver GoF information related to the GoF generation to the encoder 201.

Hereinafter, each operation in FIG. 3 is described.

GoF generation: A process of generating a reference structure for the mesh data. When the mesh of the previous frame and the current mesh have the same number of vertices, same number of texture coordinates, same vertex connectivity information, and same texture coordinate connectivity information, the previous frame may be set as a reference frame. In other words, if only the vertex coordinate values are different between the current input mesh and the reference input mesh, inter frame encoding may be performed. Otherwise, the frame may be subjected to intra frame encoding.

Mesh decimation: A process of simplifying the input mesh to create a simplified mesh, called a base mesh. Vertices to remove may be selected from the original mesh based on user-defined criteria, and then the selected vertices and the triangles connected to the selected vertices may be removed.

In the process of performing mesh decimation, the voxelized input mesh, target triangle ratio (TTR), and minimum triangle component (CCCount) information may be delivered as input, and the decimated mesh may be obtained as output. In the process, connected triangle components that are smaller than the set minimum triangle component (CCCount) may be removed.

UV parameterization: A process of mapping a 3D curved surface into a texture domain for the decimated mesh. Parameterization may be performed using the UVAtlas tool. This process generates mapping information indicating where each vertex of the decimated mesh may be mapped to on the 2D image. The mapping information is expressed and stored as texture coordinates, and the final base mesh is generated through this process.

Fitting subdivision surface: An operation of performing subdivision on the decimated mesh. A user-defined method, such as the mid-edge method, may be applied as the subdivision method. A fitting process is performed such that the input mesh and the subdivided mesh become similar to each other.

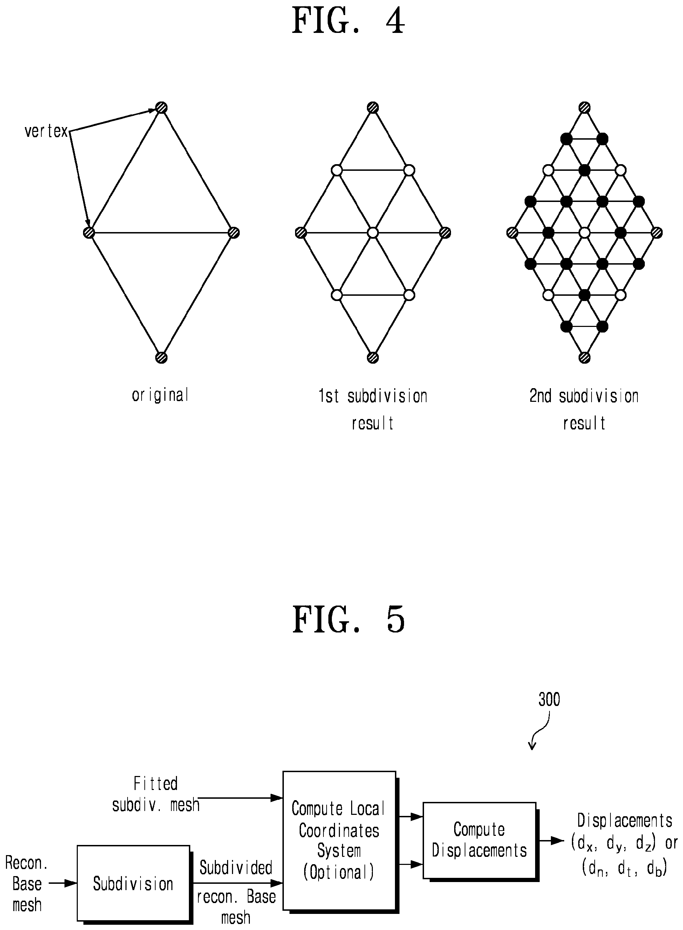

FIG. 4 illustrates a mid-edge subdivision method according to embodiments.

FIG. 4 illustrates a mid-edge subdivision method for the fitting subdivision surface described with reference to FIG. 3. Referring to FIG. 4, the original mesh containing four vertices is subdivided to create sub-meshes. The sub-meshes may be created by creating new vertices in the middle of the edges between the vertices.

Once the fitted subdivided mesh is generated, the displacements are calculated based on this result and the previously compressed and decoded base mesh (hereinafter referred to as the reconstructed base mesh). In other words, the reconstructed base mesh is subdivided in the same way as the fitting subdivision surface. The difference in position between this result and each vertex in the fitted subdivided mesh is the displacement for each vertex. Since the displacement represents a difference in position in 3D space, it is expressed as values in (x, y, z) space in the Cartesian coordinate system. Depending on a user input parameter, the coordinate values of (x, y, z) may be converted to coordinate values of (normal, tangential, bi-tangential) in a local coordinate system.

FIG. 5 illustrates a displacement generation process according to embodiments.

FIG. 5 illustrates in detail how displacements are calculated for the fitting subdivision surface 300, as described with reference to FIG. 4.

The encoder and/or pre-processor according to the embodiments may include 1) a subdivider, 2) a local coordinate system calculator, and 3) a displacement vector calculator. The subdivider may receive a reconstructed base mesh and generate a subdivided reconstructed base mesh. The local coordinate system calculator may receive the fitted subdivided mesh and the subdivided reconstructed base mesh, and may transform the coordinate system related to the mesh to a local coordinate system. The local coordinate system calculation may be optional. The displacement calculator calculates the difference in position between the fitted subdivision mesh and the subdivided reconstructed base mesh. For example, it may generate the difference in position between the vertices in the two input meshes. The difference in position between the vertices is the displacement.

The point cloud data transmission method and device according to embodiments may encode the point cloud as follows. Point cloud data (which may be referred to as a point cloud for short) according to embodiments may refer to data including vertex coordinates and color information. Point cloud is a term that includes mesh data. The terms point cloud and point cloud data may be used interchangeably herein.

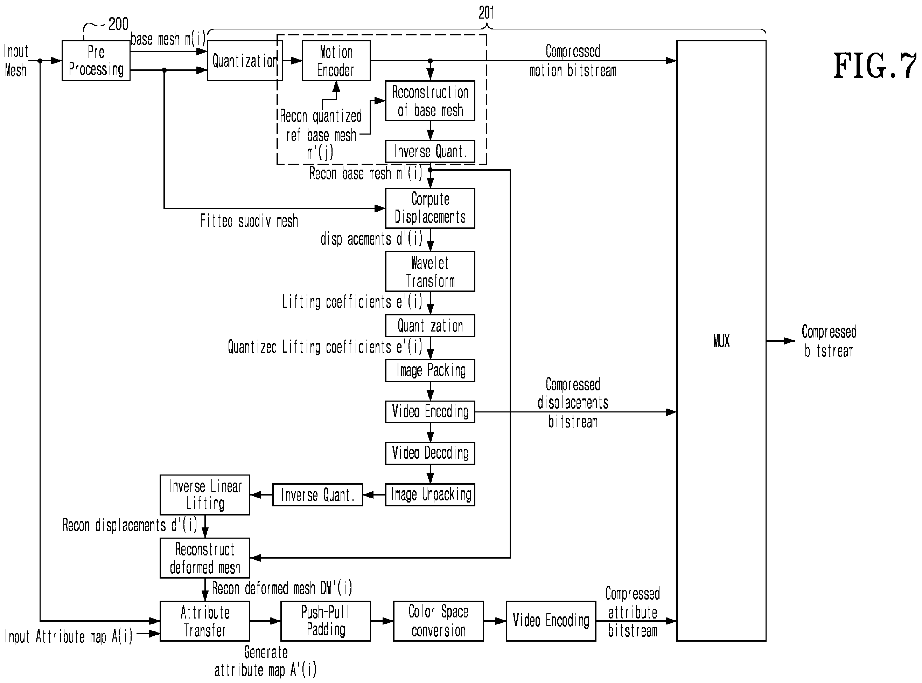

According to embodiments, the V-Mesh compression (reconstruction) method may include intra frame encoding (FIG. 6) and inter frame encoding (FIG. 7).

Based on the results of the GoF generation described above, intra frame encoding or inter frame encoding is performed. In the intra encoding, the data to be compressed may be a base mesh, displacements, an attribute map, and the like. In the inter encoding, the data to be compressed may be displacements, an attribute map, and a motion field between the reference base mesh and the current base mesh.

FIG. 6 illustrates an intra-frame encoding process in a V-MESH compression method according to embodiments.

The encoding process of FIG. 6 details the encoding of FIG. 1. That is, it represents the configuration of the encoder when the encoding of FIG. 1 is intra-frame encoding. The encoder of FIG. 6 may include a pre-processor 200 and/or an encoder 201.

The pre-processor may receive an input mesh and perform the pre-processing described above. A base mesh and/or a fitted subdivided mesh may be generated through the pre-processing. The quantizer may quantize the base mesh and/or the fitted subdivided mesh. The static mesh encoder may encode the static mesh. The static mesh encoder may generate a bitstream containing the encoded base mesh. The static mesh decoder may decode the encoded static mesh. The inverse quantizer may inversely quantize the quantized static mesh. The displacement calculator may receive a reconstructed static mesh, and may generate a displacement, which is the difference in position based on the fitted subdivided mesh. The forward linear lifting unit may receive the displacement and generate lifting coefficients. The quantizer may quantize the lifting coefficients. The image packer may pack the image based on the quantized lifting coefficients. The video decoder decodes the encoded video. The image unpacker may unpack the packed image. The inverse quantizer may inversely quantize the image. The inverse linear lifting unit applies inverse lifting to the image to generate a reconstructed displacement. The mesh reconstructor reconstructs a deformed mesh based on the reconstructed displacement and the reconstructed base mesh. The attribute transfer receives an input mesh and/or an input attribute map and generates an attribute map based on the reconstructed deformed mesh. The push-pull padding unit may pad data to the attribute map based on a push-pull method. The color space converter may convert the space of the color component, which is an attribute. The video encoder may encode the attribute. The multiplexer may multiplex the compressed base mesh, the compressed displacement, and the compressed attribute to generate a bitstream.

FIG. 7 illustrates an inter-frame encoding process in a V-MESH compression method according to embodiments.

The encoding process of FIG. 7 details the encoding of FIG. 1 in detail. That is, it represents the configuration of the encoder when the encoding of FIG. 1 is inter-frame encoding. The encoder of FIG. 7 may include a pre-processor 200 and/or an encoder 201.

For the components of the encoding operation of FIG. 7 that correspond to the encoding operation of FIG. 6, refers to the description of FIG. 7. For inter-frame-based encoding in FIG. 7, the motion encoder may encode a motion based on the reconstructed quantized reference base mesh. The base mesh reconstructor may reconstruct a base mesh based on the reconstructed quantized reference base mesh.

The encoder in FIG. 6 compresses the base mesh, displacement, and attributes within a frame to generate a bitstream, while the encoder in FIG. 7 compresses the motion, displacement, and attributes between the current frame and a reference frame to generate a bitstream.

The encoding method according to the embodiments includes base mesh encoding (intra encoding). When performing intra-frame encoding on a current input mesh frame, the base mesh generated during pre-processing may undergo quantization and be then encoded using a static mesh compression technique. In the V-Mesh compression method, for example, the Draco technique is applied, and the targets to be compressed include vertex position information, mapping information (texture coordinates), vertex connectivity data, etc. related to the base mesh.

The encoding method according to the embodiments may include motion field encoding (also inter encoding).

Inter frame encoding may be performed when the reference mesh and the current input mesh have a one-to-one correspondence of vertices, and only the position information about the vertices differs therebetween. When inter frame encoding is performed, the base mesh may not be compressed. Instead, the difference between the vertices of the reference base mesh and the current base mesh, i.e., the motion field may be computed and encoded. The reference base mesh is the result of quantizing the decoded base mesh data and is determined by the reference frame index determined in the GoF generation. The motion field may be encoded as it is. Alternatively, a predicted motion field may be calculated by averaging the motion fields of the reconstructed vertices among the vertices connected to the current vertex, and a residual motion field, which is the difference between the value of the predicted motion field and the value of the motion field of the current vertex, may be encoded. The value of this field may be encoded using entropy coding. Except for the motion field encoding in the inter frame encoding, the process of encoding the displacements and attribute map is the same as the structure of the intra frame encoding method except for the base mesh encoding.

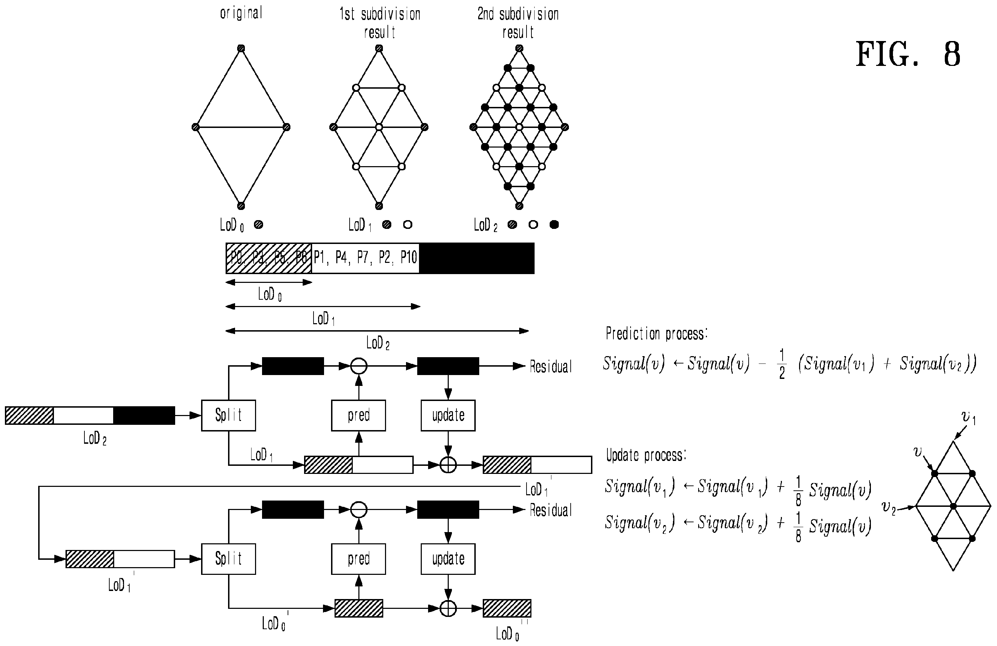

FIG. 8 illustrates a lifting transform process for displacements according to embodiments.

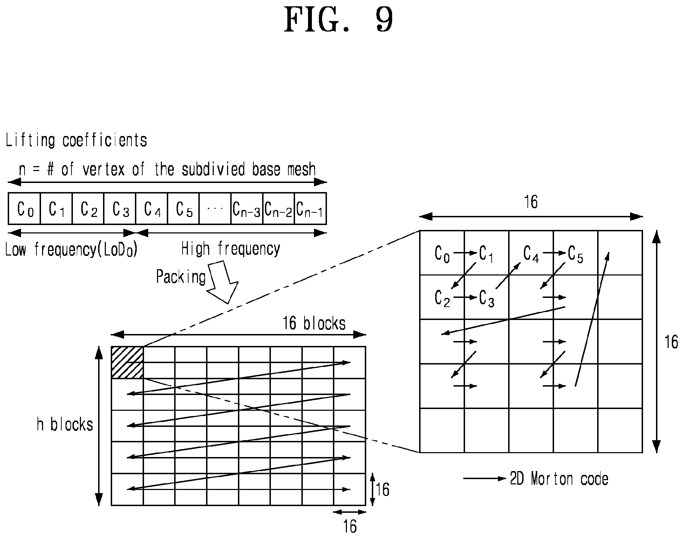

FIG. 9 illustrates a process of packing transform coefficients into a 2D image according to embodiments.

FIGS. 8 and 9 illustrate the process of transforming displacements and packing transform coefficients in the encoding process of FIGS. 6 and 7, respectively.

An encoding method according to the embodiments includes displacement encoding.

After base mesh encoding and/or motion field encoding, a reconstructed base mesh may be generated through reconstruction and inverse quantization, and a displacement may be calculated between a result of subdivision of the reconstructed base mesh and a fitted subdivided mesh generated through the fitting subdivision surface. A data transform process, such as a wavelet transform, may be applied to the displacement information for effective encoding.

FIG. 8 illustrates the process of transforming displacement information in V-Mesh using the lifting transform. The transform coefficients generated through the transform process are quantized and then packed into a 2D image. The transform coefficients may be organized into blocks, one block for every 256 (=16×16) units. Each block may be packed in a z-scan order. The number of rows in a block is fixed to 16, but the number of columns in the block may be determined by the number of vertices in the subdivided base mesh. Within a block, the transform coefficients may be sorted with the Morton code and packed. For the packed images, a displacement video may be generated per GoF. The displacement video may be encoded using a conventional video compression codec.

Referring to FIG. 8, the base mesh (original) may include vertices and edges for LoD0. A first subdivision mesh generated by splitting the base mesh includes vertices generated by further splitting the edges of the base mesh. The first subdivision mesh contains vertices for LoD0 and vertices for LoD1. LoD1 includes subdivided vertices and vertices from the base mesh (LoD0). The first subdivision mesh may be split to generate a second subdivision mesh. The second subdivision mesh contains LoD2. LoD2 includes a base mesh vertex (LoD0), LoD1 containing vertices additionally generated from LoD0, and vertices further split from LoD1. LoD is a level of detail that indicates the degree of detail. As the index of the level increases, the distance between vertices is shortened, and the level of detail rises. LoD N contains the vertices contained in LoD N-1. In the case where the vertex is further split through subdivision, the mesh may be encoded based on a prediction and/or updating method, taking into account the previous vertices v1 and v2, and the subdivided vertex v. Instead of encoding the information for the current LoD N as it is, a residual with respect to previous LoD N-1 may be generated. Thus, the mesh may be encoded using the residual to reduce the size of the bitstream. The prediction process refers to the operation of predicting the current vertex v from the previous vertices v1 and v2. Since neighboring subdivision meshes have similar data, this property may be exploited for efficient encoding. The current vertex position information is predicted from the residual for the previous vertex position information, and the previous vertex position information is updated based on the residual.

Referring to FIG. 9, a vertex has a coefficient generated through lifting transform. The coefficient of the vertex related to the lifting transform may be packed into an image and then encoded.

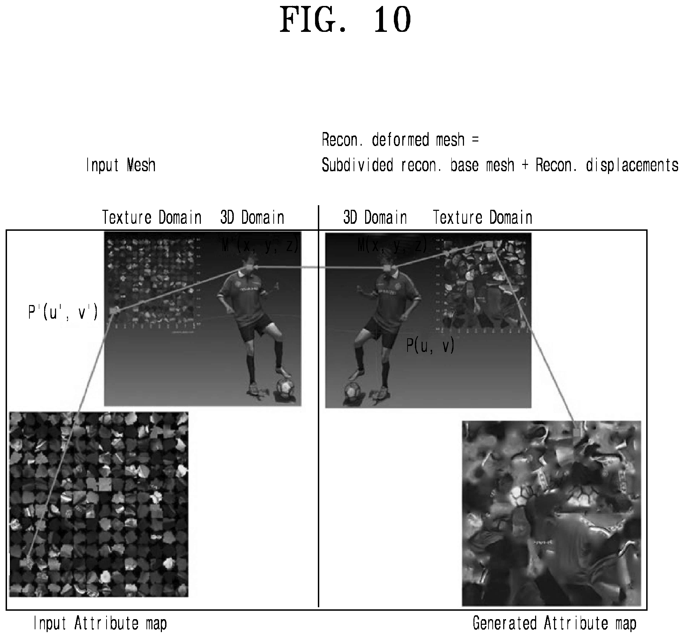

FIG. 10 illustrates an attribute transfer process in a V-MESH compression method according to embodiments.

FIG. 10 illustrates a detailed operation of the attribute transfer in the encoding of FIGS. 6, 7, etc.

The encoding according to the embodiments includes attribute map encoding.

Information about the input mesh is compressed through base mesh encoding, motion field encoding, and displacement encoding. The input mesh compressed in the encoding process is reconstructed through base mesh decoding (intra frame), motion field decoding (inter frame), and displacement video decoding, and the reconstructed deformed mesh (hereinafter referred to as Recon. deformed mesh), which is the result of the reconstruction, is used to compress the input attribute map, as shown in FIGS. 6 and 7. The recon. deformed mesh has position information about vertices, texture coordinates, and corresponding connectivity information, but does not have color information corresponding to the texture coordinates. Therefore, as shown in FIG. 10, in the V-Mesh compression method, a new attribute map having color information corresponding to the texture coordinates of the recon. deformed mesh is generated through the attribute transfer process.

The attribute transfer first checks, for every point P(u, v) in the 2D texture domain, whether the corresponding point is within a texture triangle of the Recon. deformed mesh. When the corresponding vertex is in the texture triangle T, the attribute transfer calculates the barycentric coordinates $(\alpha, \beta, \gamma)$ of $P(u, v)$ according to the triangle T. Then, it calculates the 3D coordinates $M(x, y, z)$ of $P(u, v)$ based on the 3D vertex positions of the triangle T and $(\alpha, \beta, \gamma)$. The vertex coordinates $M'(x', y', z')$ that corresponds to the closest position to the calculated $M(x, y, z)$ and a triangle T' containing this point are searched for in the input mesh domain. Then, the barycentric coordinates $(\alpha', \beta', \gamma')$ of $M'(x', y', z')$ in the triangle T' are calculated. The texture coordinates $(u', v')$ are calculated based on the texture coordinates corresponding to the three vertices of triangle T' and $(\alpha', \beta', \gamma')$, and the color information corresponding to the coordinates are searched for in the input attribute map. The color information found in this way is then assigned to the $(u, v)$ pixel position in the new input attribute map. If $P(u, v)$ does not belong to any triangle, the pixel at the position in the new input attribute map be filled with a color value using a padding algorithm, such as the push-pull algorithm.

The new attribute map generated by the attribute transfer is bundled into GoFs to construct an attribute map video, which is compressed using a video codec.

A reference relationship between the input mesh, the input attribute map, the reconstructed mesh, and the generated attribute map may be seen from FIG. 10.

The decoding process of FIG. 1 may perform the reverse of the encoding process of FIG. 1. Specifically, the decoding process is performed as disclosed below.

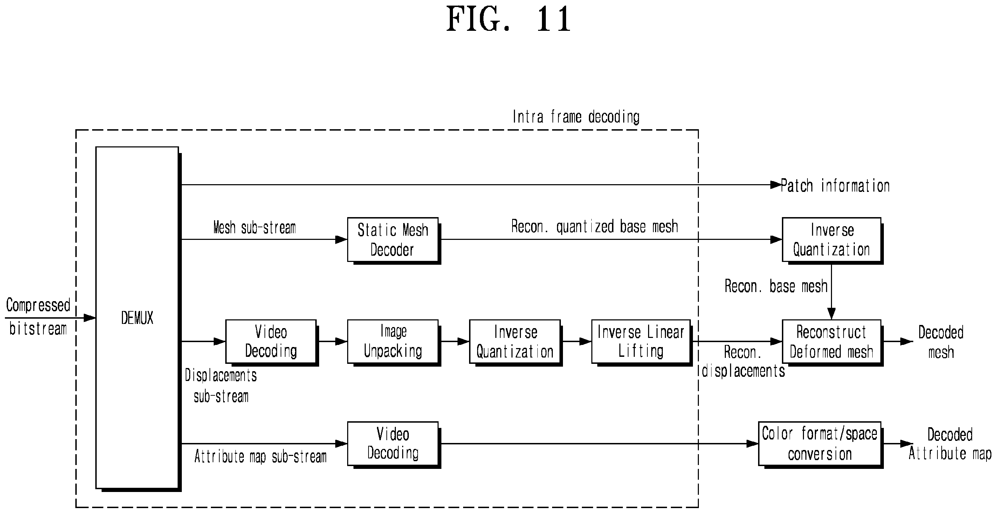

FIG. 11 shows the intra-frame decoding process of the V-MESH compression method according to embodiments.

FIG. 11 illustrates the configuration and operation of the decoder of the reception device of FIG. 1 and the like.

FIG. 11 shows the intra decoding process of the V-Mesh technology according to embodiments. First, the bitstream may be separated into a mesh sub-stream, a displacement sub-stream, an attribute map sub-stream, and a sub-stream containing patch information about the mesh, such as V3C/V-PCC.

The mesh sub-stream may be decoded through the decoder of a static mesh codec used in the encoding such as, for example, Google Draco. As a result, connectivity information, vertex geometry information, vertex texture coordinates, and the like related to the base mesh may be reconstructed. The displacement sub-stream may be decoded into a displacement video through the decoder of the video compression codec used in the encoding. Then, image unpacking, inverse quantization, and inverse transform are performed to reconstruct the displacement information about each vertex. Then, inverse quantization is applied to the reconstructed base mesh, and then the result thereof is combined with the reconstructed displacement information to generate a final decoded mesh.

The attribute map sub-stream is decoded by the decoder of the video compression codec used in the encoding, and then a final attribute map is reconstructed through color format transform and the like.

The reconstructed decoded mesh and decoded attribute map may be utilized at the receiving side as final mesh data that may be utilized by a user.

Referring to FIG. 11, the bitstream includes patch information, a mesh sub-stream, a displacement sub-stream, and an attribute map sub-stream. The term sub-stream is interpreted as referring to a partial bitstream included in the bitstream. The bitstream contains patch information (data), mesh information (data), displacement information (data), and attribute map information (data).

The decoder performs intra-frame decoding as follows. The static mesh decoder decodes the mesh to generate a reconstructed quantized base mesh, and the inverse quantizer applies the quantization parameters of the quantizer in reverse to generate a reconstructed base mesh. The video decoder decodes the displacement, the unpacker unpacks the decoded video image, and the inverse quantizer inversely quantizes the quantized image. The inverse linear lifting unit applies a lifting transform in the reverse process of the encoder to generate a reconstructed displacement. The mesh reconstructor 630 generates a deformed mesh based on the base mesh and the displacement. The video decoder decodes the attribute map, and the color transformer transforms the color format and/or space to generate a decoded attribute map.

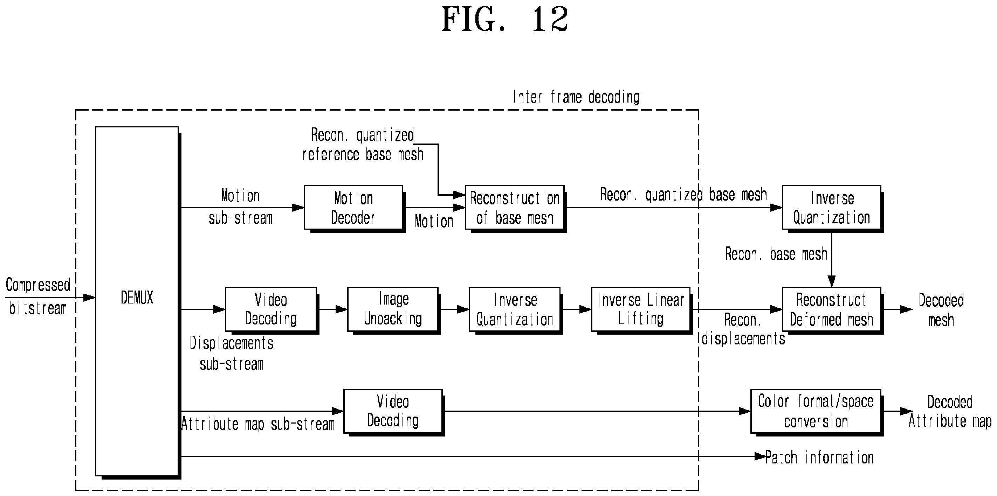

FIG. 12 illustrates an inter-frame decoding process of V-MESH technology.

FIG. 12 illustrates the configuration and operation of the decoder of the reception device of FIG. 1 and the like.

FIG. 12 illustrates the inter decoding process of V-MESH technology. First, the input bitstream may be separated into a motion sub-stream, a displacement sub-stream, an attribute sub-stream, and a sub-stream containing patch information about the mesh, such as V3C/V-PCC.

The motion sub-stream is decoded through entropy decoding and inverse prediction, and the reconstructed motion information is combined with a pre-reconstructed and stored reference base mesh to generate a reconstructed quantized base mesh for the current frame. Then, inverse quantization is applied to the reconstructed quantized base mesh, and the result thereof is combined with the displacement information reconstructed using the same method as the above-described intra decoding to generate a final decoded mesh. The reconstructed decoded mesh and the decoded attribute map may be utilized at the receiving side as the final mesh data that may be utilized by the user.

Referring to FIG. 12, the bitstream contains a motion, displacements, and an attribute map. Because inter-frame decoding is performed, the process further includes decoding the inter-frame motion information. A reconstructed base mesh is generated by decoding the motion and generating a reconstructed quantized base mesh for the motion based on the reference base mesh. For the operations in FIG. 12 that are the same as those in FIG. 11, refer to the description of FIG. 11.

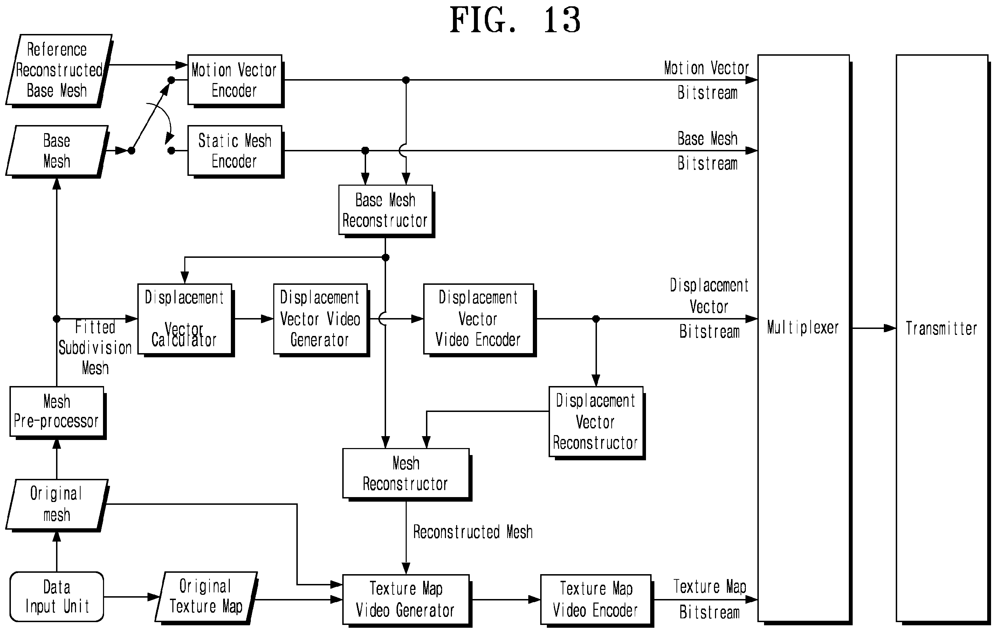

FIG. 13 illustrates a point cloud data transmission device according to embodiments.

FIG. 13 corresponds to the transmission device 100 or dynamic mesh video encoder 102 of FIG. 1, the encoder (pre-processor and encoder) of FIG. 2, and/or the corresponding transmission encoding device. Each component of FIG. 13 corresponds to hardware, software, a processor, and/or a combination thereof.

The process of operations at the transmitting side for compressing and transmitting dynamic mesh data using a V-Mesh compression technique may be configured as shown in FIG. 13.

The mesh pre-processor receives the original mesh and generates a decimated mesh. The decimation may be performed based on a target number of vertices or a target number of polygons constituting the mesh. Parameterization may be performed on the decimated mesh to generate texture coordinates and texture connectivity information per vertex. The mesh information in a floating-point form may be quantized to a fixed-point form. The result is the base mesh, which may be encoded by a static mesh encoder. The mesh pre-processor may perform a mesh subdivision on the base mesh to generate additional vertices. Depending on the subdivision method, vertex connectivity information including the additional vertices, texture coordinates, and connectivity information about the texture coordinates may be generated. A fitted subdivided mesh may be generated by adjusting vertex positions such that the subdivided mesh becomes similar to the original mesh.

When intra-frame encoding (intra encoding) is performed on the mesh frame, the base mesh may be compressed through the static mesh encoder. In this case, the connectivity information, vertex geometry information, vertex texture information, normal information, and the like related to the base mesh may be encoded. The base mesh bitstream generated through the encoding is transmitted to the multiplexer.

When inter-frame encoding (inter encoding) is performed on the mesh frame, the motion vector encoder may operate to receive as input a base mesh and a reference reconstructed base mesh, compute a motion vector between the two meshes, and encode the value thereof. Further, the motion vector encoder may perform connectivity information-based prediction using the previously encoded/decoded motion vector as a predictor, and encode a residual motion vector, which is obtained by subtracting the predicted motion vector from the current motion vector. The motion vector bitstream generated by the encoding is transmitted to the multiplexer.

A reconstructed base mesh may be generated from the encoded base mesh and motion vectors through the base mesh reconstructor.

The displacement vector calculator may perform mesh subdivision on the reconstructed base mesh. A vector may be calculated as a value of the difference in vertex position between the subdivided reconstructed base mesh and the fitted subdivision mesh generated by the pre-processor. As a result, displacement vectors as many as vertices in the subdivided mesh may be calculated. The displacement vector calculator may transform the displacement vectors calculated in the 3D Cartesian coordinate system to a local coordinate system based on the normal vector of each vertex.

The displacement vector video generator may transform the displacement vectors for effective encoding. According to embodiments, the transform may be lifting transform, wavelet transform, or the like. In addition, quantization may be performed on the transformed displacement vector values, i.e., the transform coefficients. In this case, different quantization parameters may be applied to the axes of the transform coefficients, respectively. The quantization parameters may be derived by an agreement between the encoder/decoder. After transform and quantization, the displacement vector information may be packed into a 2D image. A displacement vector video may be generated by grouping the packed 2D images for each frame. A displacement vector video may be generated for each group of frames (GoF) of the input mesh.

The displacement vector video encoder may encode the generated displacement vector video using a video compression codec. The generated displacement vector video bitstream is transmitted to the multiplexer.

The displacement vectors reconstructed through the displacement vector reconstructor and the base mesh reconstructed and subdivided through the base mesh reconstructor are reconstructed through the mesh reconstructor. The reconstructed mesh has reconstructed vertices, inter-vertex connectivity information, texture coordinates, and inter-texture coordinate connectivity information.

A texture map of a reconstructed mesh may be re-generated from the texture map of the original mesh through the texture map video generator. The vertex-by-vertex color information in the texture map of the original mesh may be assigned to the texture coordinates of the reconstructed mesh. A texture map video may be generated by grouping the frame-level re-generated texture maps into GoFs.

The generated texture map video may be encoded by the texture map video encoder using a video compression codec. A texture map video bitstream generated through the encoding is transmitted to the multiplexer.

The generated motion vector bitstream, base mesh bitstream, displacement vector bitstream, and texture map bitstream may be multiplexed into a single bitstream to be transmitted to the receiving side through the transmitter. Alternatively, for the generated motion vector bitstream, base mesh bitstream, displacement vector bitstream, and texture map bitstream, a file with one or more track data may be generated or the bitstreams may be encapsulated into segments and transmitted to the receiving side through the transmitter.

Referring to FIG. 13, the transmitter (encoder) may encode the mesh in an intra-frame or inter-frame manner. According to intra-encoding, the transmission device may generate a base mesh, displacement vectors (or displacements), and a texture map (or attribute map). According to inter-encoding, the transmission device may generate a motion vector (or motion), a base mesh, displacement vectors (or displacements), and a texture map (or attribute map). The texture map acquired from the data input unit is generated and encoded based on the reconstructed mesh. The displacements are generated and encoded based on the differences in vertex positions between the base mesh and the subdivided mesh. The base mesh is generated by pre-processing, decimating, and encoding the original mesh. For the motion, a motion vector is generated for the mesh in the current frame based on the reference base mesh in the previous frame.

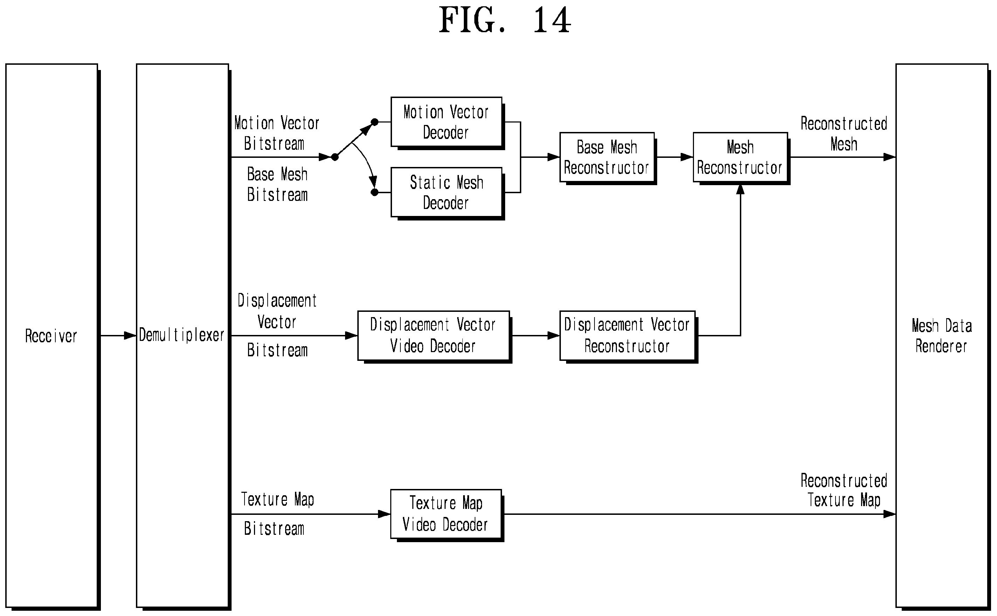

FIG. 14 illustrates a point cloud data reception device according to embodiments.

FIG. 14 corresponds to the reception device 110 or mesh video decoder 113 of FIG. 1, the decoder of FIG. 11 or 12, and/or a corresponding receiving decoding device. Each component of FIG. 14 corresponds to hardware, software, a processor, and/or a combination thereof. The reception (decoding) operation of FIG. 14 may follow a reverse process to the corresponding process of the transmission (encoding) operation of FIG. 13.

The bitstream of the received mesh is subjected to file/segment decapsulation and then demultiplexed into a compressed motion vector bitstream or base mesh bitstream, a displacement vector bitstream, and a texture map bitstream.

In the case where inter-frame encoding is applied to the current mesh based on the frame header information, the motion vector decoder may decode the motion vector bitstream. The previously decoded motion vector may be used as a predictor and add the same to the residual motion vector decoded from the bitstream to reconstruct the final motion vector.

In the case where intra-frame encoding is applied to the current mesh based on the frame header information, the static mesh decoder may decode the base mesh bitstream to reconstruct connectivity information, vertex geometry information, texture coordinates, normal information, and the like related to the base mesh.

In the case where inter-frame encoding is applied to the current mesh, the base mesh reconstructor may add the decoded motion vectors to the reference base mesh and perform inverse quantization to reconstruct the current base mesh. In the case where intra-frame encoding is applied to the current mesh, inverse quantization may be performed on the base mesh decoded by the static mesh decoder to generate a reconstructed base mesh.

The displacement vector video decoder may decode the displacement vector bitstream as a video bitstream using a video codec.

The displacement vector reconstructor extracts displacement vector transform coefficients from the decoded displacement vector video, and reconstructs displacement vectors through inverse quantization and inverse transform. If the reconstructed displacement vectors are values in a local coordinate system, inverse transform to the Cartesian coordinate system may be performed.

The mesh reconstructor may subdivide the reconstructed base mesh to generate additional vertices. Through the subdivision, vertex connectivity information including the additional vertices, texture coordinates, and connectivity information about the texture coordinates may be generated. The subdivided reconstructed base mesh may be combined with the reconstructed displacement vectors to generate a final reconstructed mesh.

The texture map video decoder may decode the texture map bitstream as a video bitstream using a video codec. The reconstructed texture map has color information about each vertex in the reconstructed mesh, and the texture coordinates of each vertex may be used to obtain the color value of the vertex from the texture map.

The reconstructed mesh and texture map are presented to the user through a rendering process using the mesh data renderer or the like.

Referring to FIG. 14, the reception device (decoder) may decode the mesh in an intra-frame or inter-frame manner. According to intra-decoding, the reception device may receive a base mesh, displacement vectors (or displacements), and a texture map (or attribute map), and decode the reconstructed mesh and reconstructed texture map to render mesh data. According to interdecoding, the reception device may receive a motion vector (or motion), a base mesh, displacement vectors (or displacements), a texture map (or attribute map), and decode the reconstructed mesh and the reconstructed texture map to render mesh data.

A device and method for transmitting point cloud data according to embodiments may encode mesh data and transmit a bitstream containing the encoded mesh data. A device and method for receiving point cloud data according to embodiments may receive a bitstream containing mesh data and decode the mesh data. The point cloud data transmission/reception method/device according to embodiments may be referred to as a method/device according to embodiments for short. The point cloud data transmission/reception method/device according to the embodiments may also be referred to as a mesh data transmission/reception method/device according to embodiments.

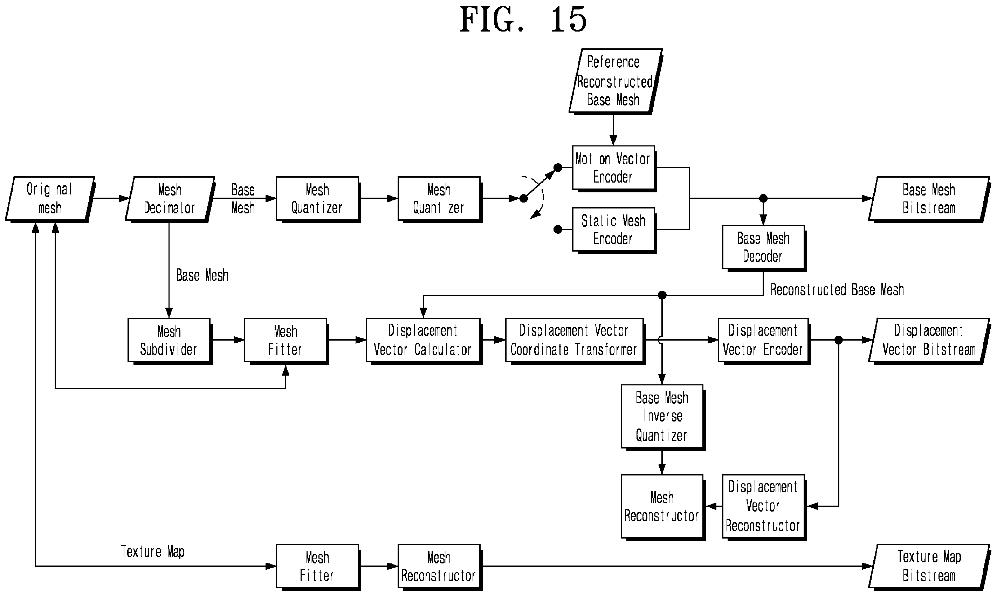

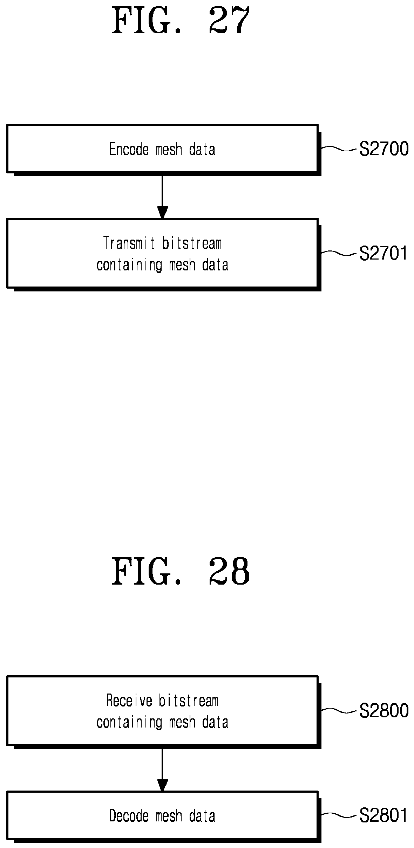

A mesh data encoding method/apparatus according to embodiments may include and perform operations of the transmission device 100, the mesh video encoder 102 of FIG. 1, the encoder of FIG. 2, the preprocessor of FIG. 3, the preprocessor of FIG. 5, the encoders of FIGS. 6 and 7, the encoder of FIG. 13, the encoders of FIGS. 15 to 18, the encoding method of FIG. 27, and the like.

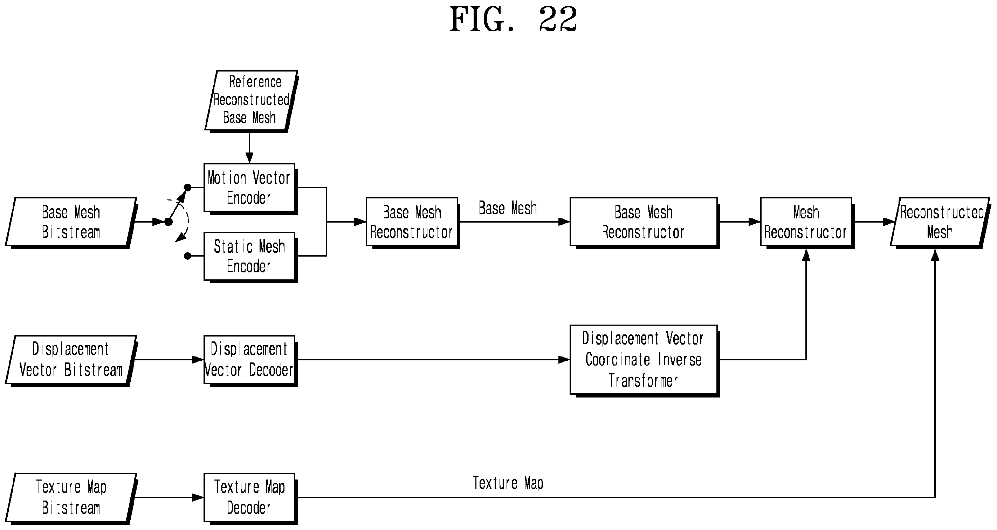

A mesh data decoding method/apparatus according to embodiments may include and perform operations of the reception apparatus 110, the mesh video decoder 113 of FIG. 1, the decoders of FIGS. 11 and 12, the decoder of FIG. 14, the decoders of FIGS. 22 to 25, the decoding method of FIG. 28, and the like.

The mesh data encoding/decoding method according to embodiments includes a valence-based adaptive displacement vector coding method for dynamic meshes.

Embodiments relate to Video-based Dynamic Mesh Compression (V-DMC), which is a method of compressing 3D dynamic mesh data using a 2D video codec. The V-DMC encoder/decoder calculates a displacement vector between a mesh reconstructed from a base mesh and a mesh fitted in the pre-processing stage, and then encode/decode the same into a displacement vector bitstream through transformation and quantization.

Embodiments include a method of performing an adaptive update process using adaptive weights derived based on the current LOD and the number of lines connected to a vertex (valence information) in performing lifting transform during displacement vector coding of a dynamic mesh. By applying the adaptive update process during the lifting transform of the displacement vector, the accuracy of the prediction process may be improved, thereby reducing the number of bits required for displacement vectors and improving encoding performance.

Embodiments relate to Video-based Dynamic Mesh Compression (V-DMC), which is a method of compressing 3D dynamic mesh data using a 2D video codec, and include a method of improving the lifting transform during displacement vector coding of a dynamic mesh, as well as related syntax and semantics information.

The V-DMC technology has been undergoing active technical standardization since the CfP Response in April 2022. In the current V-DMC standard, for dynamic mesh encoders/decoders, the update process is performed using a fixed constant weight for all vertices during the lifting transform of the displacement vector. Although connectivity information varies from vertex to vertex depending on the characteristics of the mesh data, a fixed constant weight is uniformly applied to all vertices, and a transformation process that considers the neighborhood information related to each vertex is not being performed.

Embodiments may improve encoding performance by performing an adaptive update process using adaptive weights derived through a current LOD and the number (valence) of lines connected to a vertex in performing a lifting transform during coding of displacement vectors of a dynamic mesh.

V-DMC according to embodiments may also be referred to as V-Mesh, and the two terms may be used interchangeably with the same meaning.

FIG. 15 illustrates a dynamic mesh encoder according to embodiments.

Each component of the encoder in FIG. 15 corresponds to hardware, software, a processor, and/or a combination thereof. The dynamic mesh encoder of FIG. 15 may be referred to as a mesh data encoding apparatus or an encoder.

A mesh decimator receives an original mesh and generates a decimated base mesh. The mesh decimator may decimate the input mesh based on a target number of vertices or a target number of faces.

A mesh parameterizer performs parameterization to generate texture coordinates (UV coordinates) and texture connectivity information per vertex of the input mesh.

A mesh subdivider may subdivide the base mesh to generate additional vertices. In this case, depending on the subdivision method, additional vertices may be generated by implicitly deriving geometry connectivity information, texture coordinate connectivity information, and texture coordinates.

Mesh subdivision may be performed n times based on user parameters or an agreement between the encoder and the decoder. According to embodiments, when a vertex of the base mesh is defined as $R_0$, a new vertex generated by performing subdivision once is defined as $R_1$,..., and a new vertex generated by performing subdivision n times is defined as $R_n$, $LoD_n$ may be defined as follows.

$$LoD_n = R_0 \cup R_1 \cup, \ldots, \cup R_n$$

A mesh fitter adjusts the vertex positions such that the subdivided mesh becomes similar to the original mesh.

According to embodiments, the mesh decimator, mesh parameterizer, mesh subdivider, and mesh fitter may be omitted. When the corresponding operations are skipped, the original mesh may be applied as input to a mesh quantizer.

In this case, coordinate information related to the original mesh may be input to the displacement vector calculator. In some embodiments, the displacement vector encoding process (including the displacement vector calculator, displacement vector coordinate transformer, and displacement vector encoder) may be skipped.

The mesh quantizer may perform quantization by converting geometry information (x, y, z), and/or texture coordinates (u, v), and/or normal information (nx, ny, nz) from floating-point format to fixed-point format.

According to embodiments, quantization may be skipped for specific components.

A static mesh encoder encodes connectivity information, vertex geometry information, vertex texture coordinates, normal information, and the like related to the base mesh.

A motion vector encoder may receive a reference reconstructed base mesh and a current base mesh as inputs, calculate motion vectors, and encode the motion vectors

The motion vector encoder may use previously encoded/decoded motion vectors as predictors to perform connectivity-based prediction, and perform entropy encoding on the residual motion vector obtained by subtracting the predicted motion vector from the current motion vector.

In some embodiments, the motion vector encoding may be performed on a per-vertex basis or a per-subgroup basis.

The displacement vector calculator calculates displacement vectors between a fitted subdivided mesh and a mesh obtained by subdividing a reconstructed current base mesh.

Using the displacement vector calculator, displacement vectors corresponding to the number of vertices of the subdivided mesh may be calculated.

The displacement vector coordinate transformer may transform the vertex displacement vectors calculated in (x, y, z) space into a (normal, tangential, bi-tangential) coordinate system based on the normal vector of each vertex.

According to embodiments, only the normal component in the (normal, tangential, bi-tangential) coordinate system may be encoded. When coordinate transformation is applied according to an agreement between the encoder and the decoder, only the normal component may always be encoded. Alternatively, the encoder may determine and signal a 1-bit flag (onlyNormFlag).

In this case, the normal vector may be calculated for each subdivided vertex based on the geometry information and/or connectivity information related to neighboring vertices.

Whether to apply the displacement vector coordinate transformation may be determined by agreement between the encoder and the decoder. Alternatively, a flag (applyLocalCoord) indicating whether to apply coordinate transformation may be transmitted per sequence, GOF (group of frames), frame, or submesh to determine whether to apply the coordinate transformation.

The base mesh reconstructor reconstructs the base mesh according to the encoding type (inter-frame encoding or intra-frame encoding) of the current mesh.

When inter-frame encoding is performed, the current base match may be generated by adding the reconstructed motion vectors to the reference reconstructed base mesh.

In the case where the motion vectors are not quantized, the motion vector reconstruction process may be skipped and the motion vectors calculated by the motion vector encoder may be used to reconstruct the current base mesh.

When intra-frame encoding is performed, inverse quantization may be performed on the base mesh quantized by the mesh quantizer to reconstruct the current base mesh.

The mesh quantizer performs inverse quantization on input information such as reconstructed geometry information (x, y, z), and/or texture coordinates (u, v), and/or normal information (nx, ny, nz).

In some embodiments, inverse quantization of specific components may be skipped.

The displacement vector reconstructor decodes a bitstream which has been packed with a 2D image/video and encoded through a 2D video encoder, using a 2D video decoder and performs unpacking.

Quantized transform coefficients obtained through inverse packing is inverse-quantized and inversely transformed to calculate reconstructed displacement vectors.

The mesh reconstructor performs subdivision on the reconstructed base mesh, which is obtained by inverse quantization by the base mesh inverse quantizer, to generate subdivided vertex position information, texture coordinates, and connectivity information.

Reconstructed displacement vectors are added to the subdivided vertex position information to generate reconstructed vertex position information.

The texture map generator generates a texture map of the reconstructed mesh based on the relationship among the texture coordinates and connectivity of the reconstructed mesh, the original mesh, and the texture map of the original mesh.

The texture map encoder configures a texture map video by stacking the texture maps generated by the text map generator in order of frames of the mesh and encodes the video using a 2D video encoder.

According to embodiments, when the color space of the texture map is RGB444, it may be converted to YUV420, YUV444, or other color spaces before encoding.

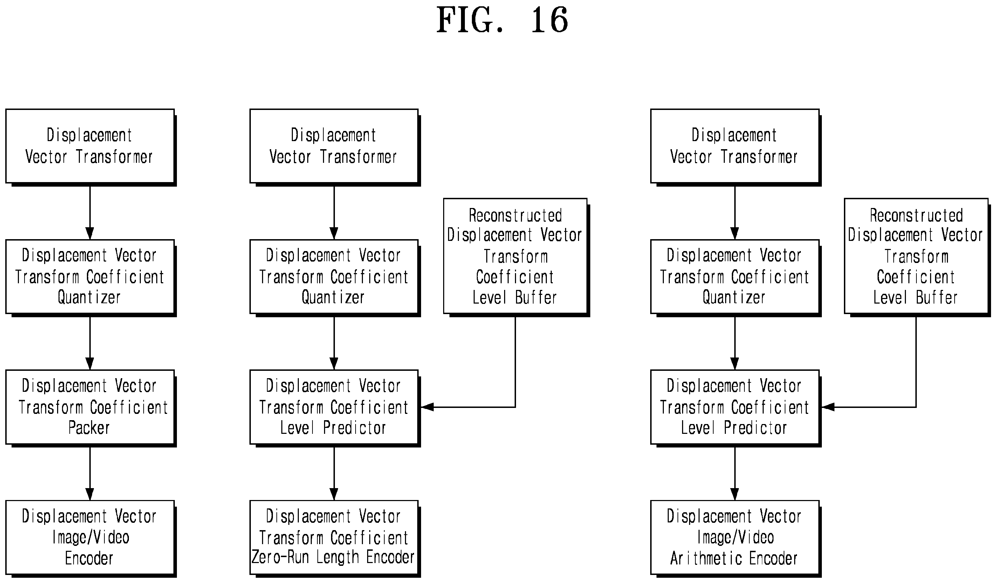

FIG. 16 illustrates a displacement vector encoder according to embodiments.

The displacement vector encoder may encode displacement vectors using a 2D video encoder such as H.264, HEVC, or VVC, or using a zero run-length encoder or arithmetic coder.

For the displacement vector encoding method, a specific encoding method may be determined by an agreement between the encoder and the decoder, or an encoding method determined by the encoder may be signaled as a flag or index (dispEncType).

There may be various displacement vector encoding methods. According to embodiments, one method among {video codec-based encoding, zero run-length encoding}, {video codec-based encoding, zero run-length encoding}, {video codec-based encoding, arithmetic coding}, and {video codec-based encoding, zero run-length encoding, arithmetic coding} may be determined through the dispEncType flag or index.

According to embodiments, the displacement vector encoding method may be determined according to a profile defined in the encoder/decoder. An index (profileToolsetIdx) indicating the profile information may be signaled, such that the decoder may determine the displacement vector decoding method according to profileToolsetIdx.

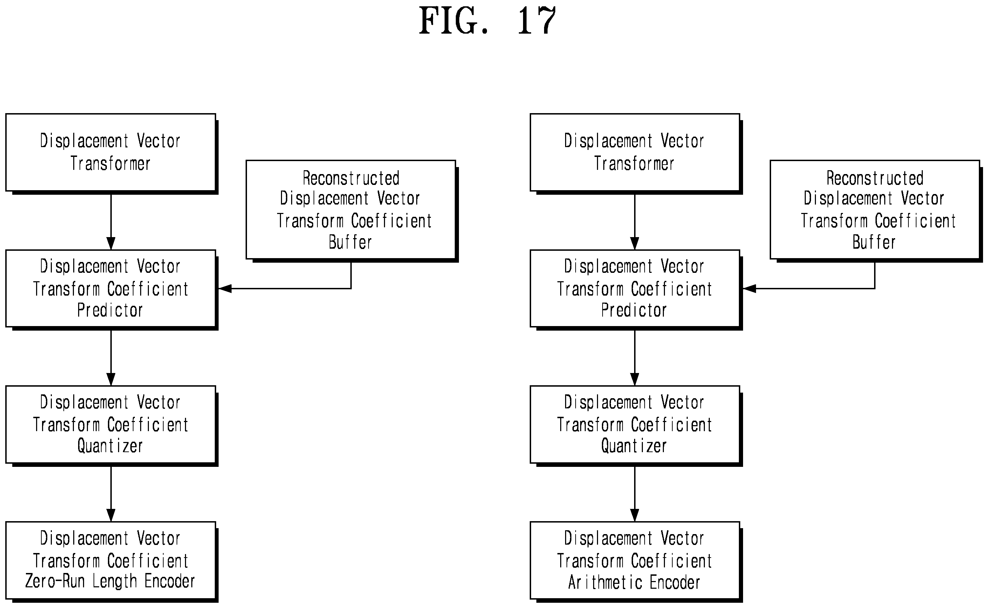

FIG. 17 illustrates a displacement vector encoder according to embodiments.

An embodiment of the displacement vector encoder according to the displacement vector encoding method is illustrated in FIG. 17.

According to embodiments, reconstructed displacement vector transform coefficients may be stored in a buffer according to a reference structure, and reconstructed displacement vector transform coefficients (refDispCoeff) of a reference mesh mapped to a current mesh vertex may be used as predictors for current displacement vector transform coefficients to perform prediction using the following equation.

```
for (size_t v=0; v < N; v++){
   for(size_t d =0; d < dim; d++){
   dispCoeff[v][d]=curdispCoeff[v][d]-refDispCoeff[v][d]
   }
   }
```

Regarding quantization of displacement vector transform coefficients, inverse quantization may be performed on a differential displacement vector transform coefficient (dispCoeff), which is obtained by subtracting a predicted displacement vector transform coefficient (refDispCoeff) from a current displacement vector transform coefficient (curdispCoeff).

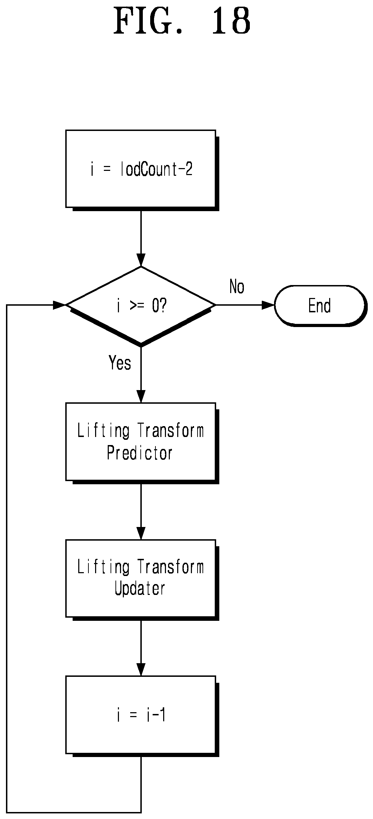

FIG. 18 illustrates a lifting transform predictor and a lifting transform updater according to embodiments.

The operation of the displacement vector transformer is as follows:

A displacement vector in the (x, y, z) or (n, t, bt) coordinate system may be transformed by the displacement vector transformer.

According to embodiments, when a coordinate system transformation to the (n, t, bt) coordinate system is performed, a 1D scalar displacement vector of a normal (n) component may be provided as an input to the displacement vector transformer, such that transformation, quantization, and encoding may be performed on the displacement value of the normal component.

According to embodiments, the transformation may be a lifting transform, a wavelet transform, or the like.

When the lifting transform is performed, the transformation of the displacement vector may be carried out through the embodiment of FIG. 7.

The number of times the lifting transform is performed may be determined based on the number of LODs (lodCount) of the mesh.

The lifting transform may be performed per LOD of the mesh.

During the lifting transform process, a lifting transform predictor and a lifting transform updater may be executed.

The operation of the lifting transform predictor is as follows:

When predicting a displacement vector for a vertex $R\_k$ of the k-th LOD, the lifting transform predictor may use a displacement vector of a vertex $R\_t$ of the t-th LOD (where t<k or t≤k) as a predictor to predict the displacement vector of the k-th LOD.

According to embodiments, when predicting a displacement vector, prediction may be performed using an average or a distance-based weighted average of n nearest points among vertices having a lower LOD than the current vertex based on connectivity information.

According to embodiments, prediction may be performed based on displacement vectors of n vertices used to generate the current vertex during the mesh subdivision stage.

A residual signal may be generated based on the difference between the displacement vector of the LOD and the predicted displacement vector.

The operation of the lifting transform updater is as follows:

The lifting transform updater may update the displacement vector of a vertex used for prediction based on the residual signal generated by the lifting transform predictor.

During the displacement vector update process, an adaptive update may be performed using an adaptive weight (LODWeight) derived based on the LOD (currentLOD) where the current transform process is being performed and an adaptive weight (valenceWeight) derived based on the number of lines connected to the vertex (i.e., valence). The update method determined by the encoder may be signaled as a flag or an index (vdmc_transform_adaptive_update_flag).

```
LODWeight=(LODScale)maxLOD-currentLOD
vcount0=pointcount[currentLOD];
```

```
vcount1= pointcount[currentLOD+1];
for(int32_t v=vcount0; v < vcount1; ++v){
v0=edge[v][0]
v1=edge[v][1]
valenceWeight0=1/valence[v0]
valenceWeight1=1/valence[v1]
dispCoeff[v0]=dispCoeff[v0]+dispCoeff[v]*K*LODWeight*valenceWeight0
dispCoeff[v1]=dispCoeff[v1]+dispCoeff[v]*K*LODWeight*valenceWeight1
}
```

The valence of a mesh vertex may be defined as the number of lines connected to the vertex or the number of other vertices connected to the vertex.

According to embodiments, the valence of a vertex may be used as the number of other vertices connected to the vertex at each LOD. It may be calculated by counting the number of adjacent vertices during the base mesh subdivision process of the mesh subdivider, or the like.

According to embodiments, the lifting transform updater may use the valence of a vertex as the number of times the vertex is used for prediction at each LOD. The valence may be calculated by accumulating the number of times a vertex is used by the mesh subdivider or the displacement vector transformer for prediction at each LOD.

```
vcount0=pointcloud[currentLOD];
vcount10=pointcloud[currentLOD+1];
for(int32_t v=vcount0; v < vcount1; ++v){
v0=edge[v][0]
v1=edge[v][1]
valence[v0]++;
valence[v1]++;
resDispCoeff[v0]+=dispCoeff[v];
resDispCoeff[v1]+=dispCoeff[v];
}
LODWeight=(LODScale)maxLOD-currentLOD
for(int32_t v=0; v < vcount0; ++v){
valenceWeight=1/valence[v]
dispCoeff[v]=dispCoeff[v]+resDispCoeff[v]*K*LODWeight*valenceWeight
}
```

The adaptive weight (valenceWeight) derived based on the number of lines connected to a vertex (=valence) may be calculated as the reciprocal of the valence of the vertex currently being updated.

The adaptive weight (LODWeight) derived based on the LOD where the current transform process is being performed may be calculated to decrease at a specific ratio based on the current LOD (currentLOD) relative to the maximum LOD (maxLOD) of the mesh, and vdmc_transform_update_lod_scale determined by the encoder may be signaled.

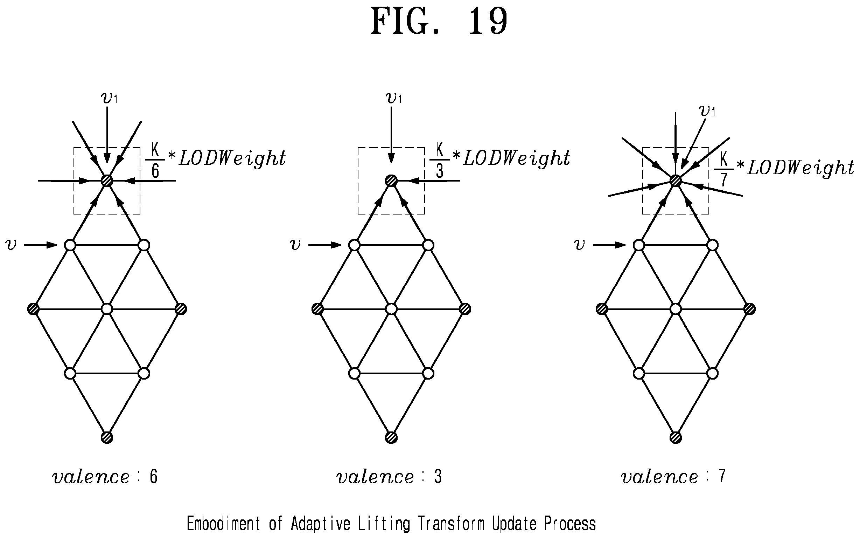

FIG. 19 illustrates an adaptive lifting transform update method according to embodiments.

The lifting transform updater may perform an update using a constant weight K for scaling, which is derived through neighborhood information during the displacement vector update process.

During the displacement vector update process, an update may be performed using a constant weight K for scaling determined by the encoder, and a flag or index vdmc_transform_explicit_update_constant_flag indicating whether the constant weight K determined by the encoder is used and the constant weight K (vdmc_transform_update_constant) may be signaled.

According to embodiments, a clipping operation may be used to limit the minimum valence size of a vertex that may be used in the displacement vector update process or adaptive weight table storage to N (N≥1) and to limit the maximum valence size of the vertex that may be used to M (M≥N).

According to embodiments, the clipping operation may be performed as follows:

valence[v]=valence[v]<N ? N: valence[v] > M ? valence[v]

valence[v]=valence[v]<N ? N: valence[v]

valence[v]=valence[v]>M ? M: valence[v]

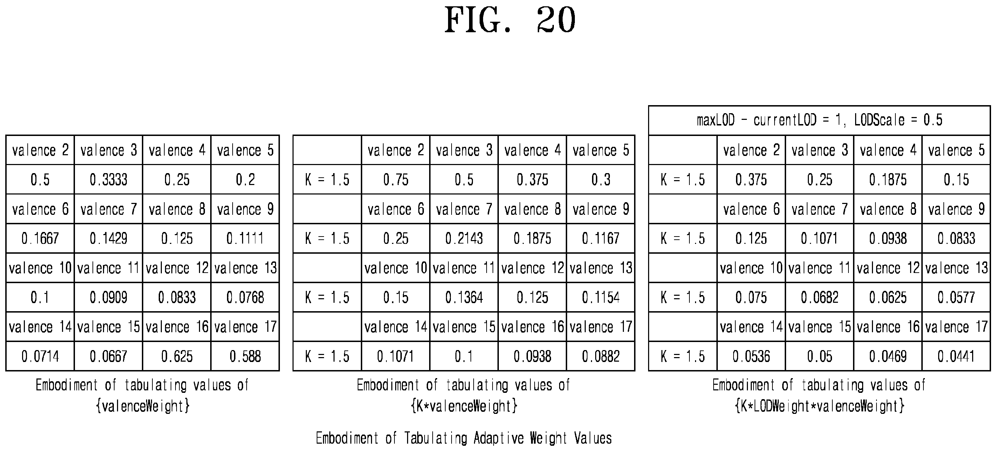

FIG. 20 illustrates adaptive weights according to embodiments.

The lifting transform updater may calculate adaptive weights based on a table. For example, according to embodiments, values of {valenceWeight}, {K*valenceWeight}, or {K*LODWeight*valenceWeight} may be calculated and stored in the form of a table.

As shown in FIG. 20, a look-up table method may be used in the displacement vector update process.

When a look-up table method is used for adaptive weights, a table index may be derived from the valence of a vertex (the number of lines connected to the vertex) or the current LOD.

According to embodiments, for predefined values of K, maxLOD - currentLOD, and LODScale, values of {K * valenceWeight} or {K * LODWeight * valenceWeight} may be calculated and stored in multiple tables.

According to embodiments, when a table corresponding to current values of K, maxLOD - currentLOD, and LODScale is present, {K * valenceWeight} or {K * LODWeight * valenceWeight} may be used as a table look-up. When it is not present, {valenceWeight} may be used as a table look-up.

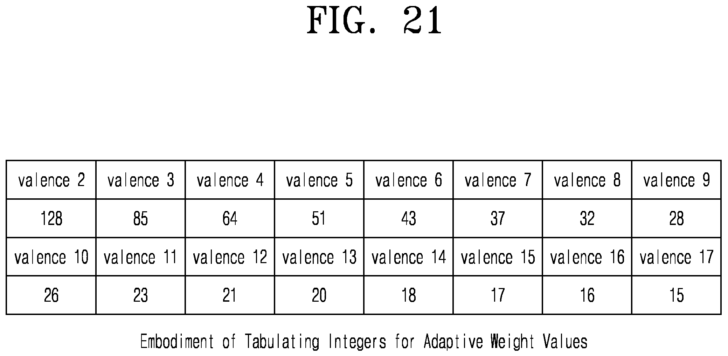

FIG. 21 illustrates adaptive weights according to embodiments.

The lifting transform updater may use integer values as adaptive weights. For example, according to embodiments, n-bit scaled integer values as the values of {valenceWeight}, {K * valenceWeight}, or {K * LODWeight * valenceWeight} may be stored during tabulation. As shown in FIG. 21, a table look-up may be used during the update process of displacement vectors.

In cases where the encoding/decoding method according to embodiments uses an integer weight table, the lifting transform update may be performed using a value obtained by performing an n-bit inverse shift operation after multiplication between the residual signal and the adaptive weight.

The displacement vector transform coefficient quantizer quantizes the transform coefficients transformed through the displacement vector transformer.

Transform coefficients according to embodiments may be quantized using different quantization parameters for each axis. By deriving quantization parameters or scaling parameters according to an agreement between the encoder and decoder, the quantization rate may be determined for each LoD level.

FIG. 22 illustrates a dynamic mesh decoder according to embodiments.

When current mesh data is encoded based on inter-frame prediction, the motion vector decoder may decode a base mesh bitstream based on a reference reconstructed base mesh.

The motion vector decoder may decode residual motion vectors on a per-vertex basis or a per-sub-block basis from the motion vector bitstream, perform connectivity-based prediction using previously decoded motion vectors as predictors, and decode motion vectors by adding the residual motion vectors.

The static mesh decoder may reconstruct connectivity information, vertex geometry information, vertex texture coordinates, and normal information related to the base mesh.

When a current base mesh is encoded based on a reference mesh, the base mesh reconstructor may reconstruct the current base mesh by adding motion vectors to the reference base mesh and then performing inverse quantization.

When the current base mesh is decoded through the static mesh encoder, the base mesh reconstructor generates a reconstructed base mesh by performing inverse quantization. According to embodiments, the inverse quantizer may be omitted.

The mesh subdivider may subdivide the base mesh to generate additional vertices. In this case, depending on the subdivision method, additional vertices may be implicitly derived and generated for geometry connectivity information, texture coordinate connectivity information, and texture coordinates.

The mesh subdivider may perform subdivision using a method such as mid-edge, Loop, or Catmull-Clark according to embodiments.

The mesh subdivision may be performed n times based on user parameters or an agreement between the encoder and the decoder. According to embodiments, when a vertex of the base mesh is defined as $R_0$, a new vertex generated by performing subdivision once is defined as $R_1$,..., and a vertex generated by performing subdivision n times is defined as $R_n$, $LoD_n$ may be defined as follows:

$$LoD_n = R_0 \cup R_1 \cup, \ldots, \cup R_n$$

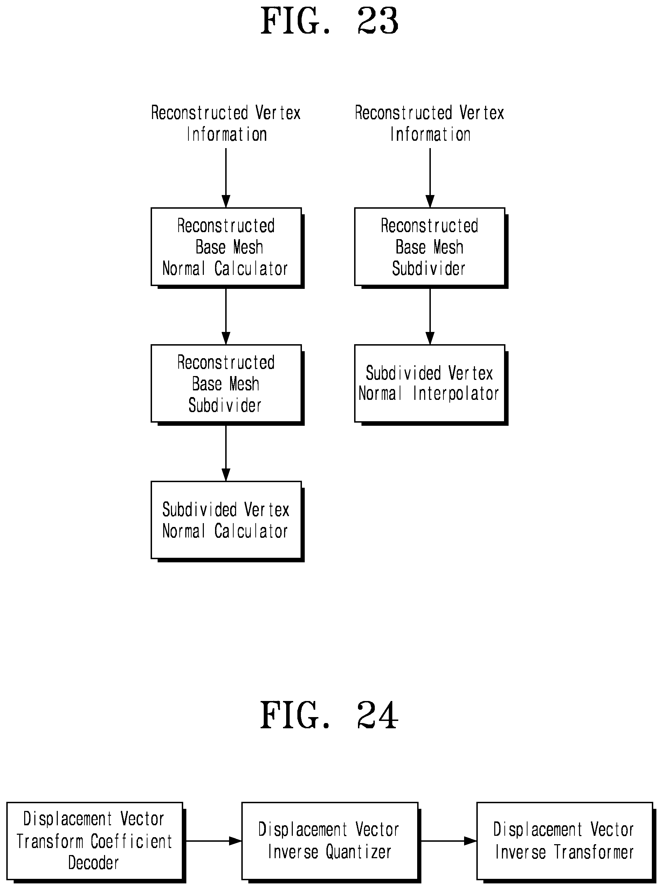

FIG. 23 illustrates an inverse displacement vector coordinate transformer according to embodiments.

When the flag () indicating whether to apply coordinate transformation parsed per sequence, GOF, frame, or submesh is equal to 1, the displacement vector inverse coordinate transformer may inversely transform the inverse-quantized reconstructed displacement vector to the (x, y, z) coordinate system.

As illustrated in FIG. 23, a normal vector may be calculated per vertex based on the reconstructed vertex position information related to the reconstructed base mesh, and additional vertices may be generated by subdivision. Then, normal values may be assigned to the new generated vertices by interpolating the vertex normal vectors of the reconstructed base mesh calculated for the generated vertices.

In this case, the interpolation may be performed by obtaining the average or distance-based weighted sum of normal information related to the base mesh used for the subdivision.

As illustrated in FIG. 23, according to an embodiment, subdivision may be performed on the reconstructed base mesh, and then normal vectors may be calculated for both the vertices generated by the subdivider and the vertices of the base mesh.

Based on the calculated normal vectors per vertex, tangential and bi-tangential vectors perpendicular to the normal vectors may be calculated, and the inverse coordinate transform of the displacement vector may be performed using the following equation.

$$\overrightarrow{disp_{xyz}} = disp_n[0] * \vec{n} + disp_n[1] * \vec{t} + disp_n[2] * \vec{b}$$

According to embodiments, the coordinate inverse transform may always be performed without transmitting a flag.

The mesh reconstructor adds the reconstructed displacement vectors to the vertices generated through the subdivision by the mesh subdivider to calculate the vertex position information related to the reconstructed mesh.

The texture map decoder may receive a texture map bitstream and decode a texture map.

Types of texture map decoders include a video decoder, a zero-run length decoder, and an arithmetic decoder.

According to embodiments, color space conversion of the texture map may be performed.

FIG. 24 illustrates a displacement vector decoder according to embodiments.

The displacement vector transform coefficient decoder may decode displacement vectors using a 2D video decoder such as H.264, HEVC, or VVC, or using a zero run-length decoder, an arithmetic coder, or the like.

For the displacement vector transform coefficient decoding method, a specific decoding method may be determined by an agreement between the encoder and the decoder, or an encoding method determined by the encoder may be received as a flag or index (dispEncType) to determine the method.

There may be various displacement vector transform coefficient decoding methods. According to embodiments, one method among {video codec-based encoding, zero run-length decoding}, {video codec-based decoding, zero run-length decoding}, {video codec-based decoding, arithmetic coding}, or {video codec-based decoding, zero run-length decoding, arithmetic coding} may be determined through the dispEncType flag or index.

According to embodiments, the displacement vector transform coefficient decoding method may be determined according to a profile defined in the encoder and decoder. An index (profileToolsetIdx) indicating the profile information may be received, such that the decoder may determine the displacement vector decoding method according to the profileToolsetIdx.

The displacement vector inverse quantizer may perform inverse quantization on the displacement vectors.

According to embodiments, transform coefficients may be quantized through different quantization parameters for each axis, and the quantization rate may be determined for each LoD level by deriving quantization parameters or scaling parameters according to an agreement between the encoder and decoder.

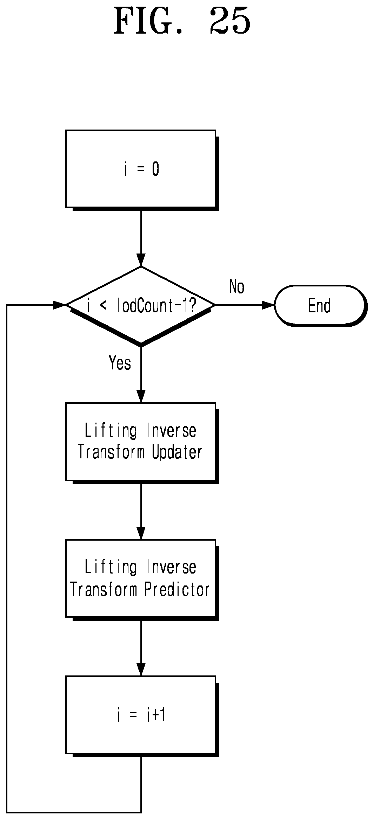

FIG. 25 illustrates an inverse lifting transform updater and an inverse lifting transform predictor according to embodiments.

The displacement vector inverse transformer may perform an inverse transform corresponding to the transform performed by the encoder.

According to embodiments, the inverse transform may include a lifting inverse transform and a wavelet inverse transform.

When the lifting inverse transform is performed, the inverse transform of the displacement vector may be carried out through the embodiment of FIG. 25.

The number of times the lifting inverse transform is performed may be determined based on the number of LODs (lodCount) of the mesh.

The lifting inverse transform may be performed per LOD of the mesh.

During the lifting inverse transform process, a lifting inverse transform predictor and a lifting inverse transform updater may be executed.

The lifting inverse transform predictor may perform prediction on the displacement vector obtained through execution of the lifting inverse transform updater.

When predicting a displacement vector for a vertex $R_k$ of the k-th LOD, the lifting inverse transform predictor may use a displacement vector of a vertex $R_t$ of the t-th LOD (where t<k or t≤k) as a predictor to predict the displacement vector of the k-th LOD.

According to embodiments, when predicting a displacement vector, prediction may be performed using an average or a distance-based weighted average of n nearest points among vertices having a lower LOD than the current vertex based on connectivity information.

According to embodiments, prediction may be performed based on displacement vectors of n vertices used to generate the current vertex during the mesh subdivision stage.

The displacement vector of a vertex at an LOD may be reconstructed by summing a predicted displacement vector and a parsed residual signal.

The lifting inverse transform updater may update the displacement vector of a vertex used for prediction based on the parsed residual signal.

During the displacement vector update process, when the parsed vdmc_transform_adaptive_update_flag is equal to 0, the update may be performed using a fixed weight.

During the displacement vector update process, when the parsed vdmc_transform_adaptive_update_flag is equal to 1, an adaptive update may be performed using an adaptive weight (LODWeught) derived based on the LOD (currentLOD) where the current inverse transform process is being performed and an adaptive weight (valenceWeight) derived based on the number of lines connected to the vertex.

For example, the mesh data encoding/decoding method according to embodiments may update the displacement vector based on the weights according to embodiments as follows.

```
LODWeight=(LODScale)maxLOD-currentLOD
vcount0=pointcount[currentLOD];
cvount1=pointcount[currentLOD+1];
for (int32_t v = vcount0; v < vcount1; ++v){
v0-edge[v][0];
v1=edge[v][1];
valenceWeight0=1/valence[v0]
valenceWeight1=1/valence[v1]
dispCoeff[v0]=dispCoeff[v0]-dispCoeff[v]*K*LODWeight*valenceWeight0
dispCoeff[v1]=dispCoeff[v1]-dispCoeff[v]*K*LODWeight*valenceWeight1
}
```

The adaptive weight (LODWeight) derived based on the LOD where the current inverse transform process is being performed may be calculated to increase at a specific ratio (Lodscale) based on the current LOD (currentLOD) relative to the maximum LOD (maxLOD) of the mesh, and the update may be performed by parsing vdmc_transform-m_update_lod_scale received from the encoder and using the same as the Lodscale.

The ???? of a mesh vertex may be defined as the number of lines connected to the vertex or the number of other vertices connected to the vertex.

According to embodiments, the valence of a vertex may be used as the number of other vertices connected to the vertex at each LOD. It may be calculated by counting the number of adjacent vertices during the base mesh subdivision process of the mesh subdivider, or the like.

According to embodiments, the lifting inverse transform updater may use the valence of a vertex as the number of times the vertex is used for prediction at each LOD. The valence may be calculated by accumulating the number of times a vertex is used by the mesh subdivider or the displacement vector transformer for prediction at each LOD.

For example, the mesh data encoding/decoding method according to embodiments may update the displacement vector based on the weights according to embodiments as follows.

```
vcount0=pointcount[currentLOD]
vcount1=pointcount[currentLOD+1];
for (int32_t v=vcount0; v< vcount1; ++v){
v0=edge[v][0]
v1=edge[v][0]
valence[v0]++;
valence[v0]++;
resDispCoeff[v0]+=dispCoeff[v];
resDispCoeff[v1]+=dispCoeff[v];
}
LODWeight=(LODScale)maxLOD-currentLOD
for (int32_t v=0; v<vcount0; ++v){
valenceWeight=1/valence[v]
dispCoeff[v]=dispCoeff[v]-resDispCoeff[v]*k*LODWeight*valenceWeight
}
```

The adaptive weight ( ) derived through the number of lines connected to a vertex ( ) may be calculated as the reciprocal of the valence of the vertex currently being updated.

During the displacement vector update process, when the parsed vdmc_transform_explicit_update_constant_flag is equal to 0, the update may be performed using a constant weight K for scaling, which is derived through neighborhood information.

During the displacement vector update process, when the parsed vdmc_transform_explicit_update_constant_flag is equal to 1, the update may be performed by parsing vdmc_transform_update_constant received from the encoder and using the same as the constant weight K for scaling.

The lifting inverse transform updater may calculate values of {valenceWeight}, {K* valenceWeight}, {K* LODWeight *valenceWeight} and store the same in the form of a table. They may be used in a look-up table method during the displacement vector update process.

When the look-up table method is used for adaptive weights, a table index may be derived from the valence of a vertex or the current LOD.

According to embodiments, for predefined values of K, maxLOD - currentLOD, and LODScale, values of {K*vlaenceWeight} or {K*LODWeight*vlaenceWeight} may be calculated and stored in multiple tables.

According to embodiments, when a table corresponding to current values of K, maxLOD - currentLOD, and LODScale is present, {K*vlaenceWeight} or {K*LODWeight*vlaenceWeight} may be used as a table look-up. When it is not present, {vlaenceWeight} may be used as a table look-up.

According to embodiments, a clipping operation may be used to limit the minimum valence size of a vertex that may be used in the displacement vector update process or adaptive weight table storage to N (N≥1) and to limit the maximum valence size of the vertex that may be used to M (M≥N).

According to embodiments, the clipping operation may be performed as follows:

valence[v]=valence[v]<N ? N: valence[v] > M ? M: valence[v]

valence[v]=valence[v]<N ? N: valence[v]

valence[v]=valence[v]<M ? M: valence[v]

According to embodiments, n-bit scaled integer values may be stored as the values of {vlaenceWeight}, {K*vlaenceWeight}, {K*LODWeight*vlaenceWeight} during tabulation, and may be used as a table look-up during the update process of displacement vectors.

In cases where an integer weight table is used according to embodiments, the update may be performed using a value obtained by performing an n-bit inverse shift operation after the multiplication between the residual signal and the adaptive weight.

dispCoeff[v0]=dispCoeff[v0]+((dispCoeff[v]*adaptiveWeight0)>>n)

dispCoeff[v1]=dispCoeff[v1]+((dispCoeff[v]*adaptiveWeight1)>>n)

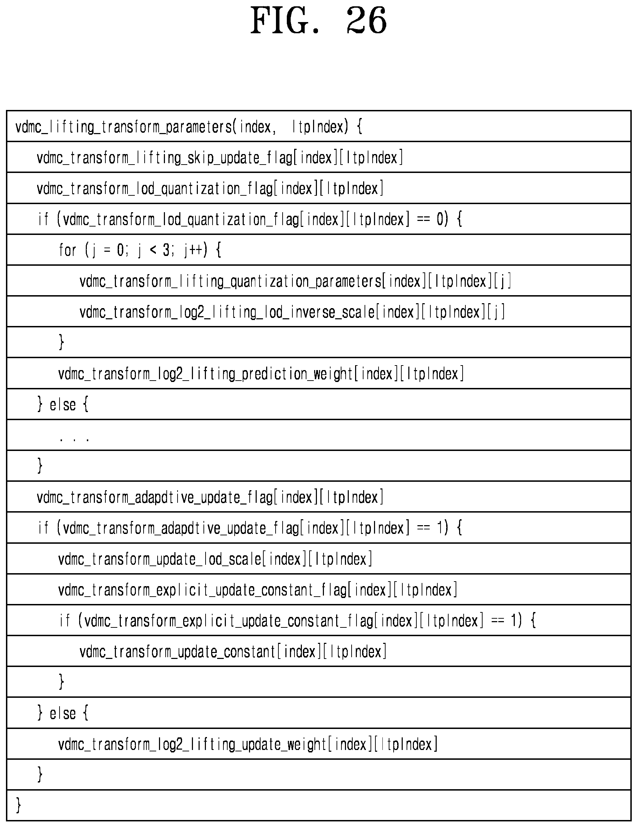

FIG. 26 illustrates lifting transform parameters according to embodiments.

A mesh data encoding method/apparatus according to embodiments (the transmission device 100, the mesh video encoder 102 of FIG. 1, the encoder of FIG. 2, the preprocessor of FIG. 3, the preprocessor of FIG. 5, the encoders of FIGS. 6 and 7, the encoder of FIG. 13, the encoders of FIGS. 15 to 18, the encoding method of FIG. 27, and the like) may encode mesh data and generate/transmit a bitstream containing the encoded mesh data and parameter information related to the mesh data.

A mesh data decoding method/apparatus according to embodiments (the reception apparatus 110, the mesh video decoder 113 of FIG. 1, the decoders of FIGS. 11 and 12, the decoder of FIG. 14, the decoders of FIGS. 22 to 25, the decoding method of FIG. 28, and the like) may receive a bitstream and decode mesh data based on parameter information contained in the bitstream.

The bitstream according to embodiments may contain a vdmc lifting transform parameter.

Displacement vector local coordinate transform information (applyLocalCoord): This is a flag indicating whether a local coordinate transformation is applied to the displacement vector. When this information is 0, it may indicate the (x, y, z) coordinate system. When the information is 1, it may indicate the (n, t, b) coordinate system.

Displacement vector encoding information (onlyNormalFlag): This is a 1-bit flag indicating whether a 1D displacement vector (normal component) is encoded. When this information is 0, decoding is performed for the (n, t, b) displacement vector. When the information is 1, decoding is performed for the 1D displacement value of the normal component.

Displacement vector decoding method (dispEncType): This is a flag or index for determining the displacement vector decoding method. According to the parsed dispEncType, displacement vector decoding may be performed through a 2D video codec, zero-run length decoding, or arithmetic decoding.

Profile index (profileToolIdx): A decoding method may be determined according to a profile defined in the encoder/decoder. The displacement vectors may be decoded using a 2D video codec, zero-run length decoding, or arithmetic decoding according to the profileToolIdx. When the displacement vector decoding method is determined according to profileToolIdx, dispEncType may be omitted.

The bitstream or lifting transform parameter according to embodiments may further include information related to the displacement vector transformer and inverse transformer.

lodCount: Indicates the number of mesh LODs. For example, when lodCount = 3, the mesh may include LODs 0, 1, and 2.

maxLOD: Indicates the maximum mesh LOD. For example, when lodCount=3, maxLOD has a value of 2.

currentLOD: Indicates the mesh LOD at which the current lifting transform/inverse-transform is being performed.

dispCoeff[v]: Indicates the displacement vector value of vertex v.

resDispCoeff[v]: Indicates the residual signal generated during the lifting transform prediction.

valence[v]: Indicates the number of lines connected to vertex v for which the current lifting transform/inverse transform update process is being performed.

vdmc_transform_adaptive_update_flag: A flag that determines whether to perform an adaptive update during the lifting inverse transform.

vdmc_transform_update_lod_scale: Indicates an adaptive update LoD weight scale value determined by the encoder.

vdmc_transform_explicit_update_constant_flag: A flag that determines whether to use a weight value determined by the encoder during the adaptive update of the lifting inverse transform.

vdmc_transform_update_constant: Indicates an adaptive update weight constant value determined by the encoder. Here, the constant value is the aforementioned K, which may be determined based on experimental or calibration values.

The mesh data decoding method according to embodiments may include calculating a weight and/or a valence based on lifting transform parameter information.

FIG. 27 illustrates a mesh data encoding method according to embodiments.

The mesh data encoding method according to embodiments may include encoding mesh data (S2700).

The mesh data encoding method according to embodiments may further include transmitting a bitstream containing the mesh data (S2701).

Referring to FIG. 15, regarding mesh encoding, the encoding of the mesh data may include encoding a base mesh of the mesh data, encoding a displacement vector of the mesh data, and encoding an attribute of the mesh data.

Referring to FIGS. 16 and 17, regarding displacement vector encoding, the encoding of the displacement vector may include predicting transform coefficients for the displacement vector, quantizing the transform coefficients for the displacement vector, and encoding the transform coefficients for the displacement vector based on at least one of a video codec scheme, a zero-run length scheme, or an arithmetic coding scheme.

Referring to FIG. 18, regarding lifting transform, the encoding of the displacement vector may include transforming transform coefficients for the displacement vector based on a lifting scheme, wherein a displacement vector for a vertex of the mesh data may be updated based on a weight related to a level of the mesh data and a weight related to the number of lines connected to the vertex.

The mesh data encoding method of FIG. 27 may be performed by a mesh data encoding apparatus (encoder). Referring to FIG. 1, the mesh data encoding apparatus may include at least one processor, and at least one memory storing instructions. When the instructions are executed by the processor, the encoding apparatus may be configured to perform operations including encoding mesh data, and transmitting a bitstream containing the mesh data.

FIG. 28 illustrates a mesh data decoding method according to embodiments.

The mesh data decoding method according to embodiments may include receiving a bitstream containing mesh data (S2800).

The mesh data decoding method according to embodiments may further include decoding the mesh data (S2801).

The decoding method of FIG. 28 may follow the reverse process of the encoding method of FIG. 27.

Referring to FIG. 22, regarding the mesh decoding, the decoding of the mesh data (S2801) may include decoding a base mesh of the mesh data, decoding a displacement vector of the mesh data, and decoding an attribute of the mesh data.

Referring to FIG. 23, regarding the displacement vector coordinate inverse transformer, the decoding of the displacement vector may include inversely transforming a coordinate system of the displacement vector. The inversely transforming of the coordinate system may include generating a normal vector for a vertex of the base mesh, and generating a normal vector for a vertex related to subdivision of the base mesh. Alternatively, the inversely transforming of the coordinate system may include generating a normal vector for a vertex related to subdivision of the base mesh and a normal vector for a vertex of the base mesh.

Referring to FIG. 24, regarding the displacement vector decoding, the decoding of the displacement vector may include decoding transform coefficients for the displacement vector, inverse-quantizing the displacement vector, and inversely transforming the displacement vector.

Referring to FIG. 25, regarding the lifting inverse transform update, the displacement vector may be inversely transformed based on a lifting scheme, wherein a displacement vector for a vertex of the mesh data may be updated based on a weight related to a level of the mesh data and a weight related to the number of lines connected to the vertex.

Referring to FIG. 25, regarding the weights for the lifting inverse transform update, the weight related to the level of the mesh data may be generated based on a maximum value of the level, wherein the weight related to the number of lines connected to the vertex may be generated based on a reciprocal of the number of lines connected to the vertex.

Referring to FIG. 25, regarding the weights for the lifting inverse transform update, the weight related to the number of lines connected to the vertex may be generated based on a reciprocal of the number of times the vertex is used for prediction.

Referring to FIG. 25, regarding the weights for the lifting inverse transform update, the displacement vector may be updated based on stored information including values related to the weight related to the level of the mesh data and the weight related to the number of lines connected to the vertex.

Referring to FIG. 26, regarding the bitstream parameters, the bitstream may contain parameter information related to a lifting transform related to the mesh data.

**EP 4 787 861 A1**

The mesh data decoding method of FIG. 28 may be performed by a mesh data decoding apparatus (decoder).

Referring to FIG. 1, the mesh data decoding apparatus may include at least one processor, and at least one memory storing instructions. When the instructions are executed by the processor, the decoding apparatus may be configured to perform operations including receiving a bitstream containing mesh data, and decoding the mesh data.

Embodiments may have the following technical effects.

Embodiments include a method for improving the lifting transform of displacement vectors performed in conventional V-DMC. In the case of current dynamic mesh encoders/decoders, the update process during the lifting transform of displacement vectors is performed using a fixed constant weight for all vertices, thus a transform process that considers neighborhood information related to each vertex is not performed. Therefore, when performing the lifting transform during displacement vector coding of a dynamic mesh, the embodiments may improve encoding performance through an adaptive update process based on information about adaptive weights derived through the current LOD and the number of lines connected to the vertex (valence). By applying the adaptive update process during the lifting transform of displacement vectors to improve the accuracy of the prediction process, the bit amount of the displacement vector may be reduced and the encoding performance may be enhanced.

The embodiments have been described in terms of a method and/or a device. The description of the method and the description of the device may complement each other.

Although embodiments have been described with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may also fall within the scope of the appended claims and their equivalents. The devices and methods may not be limited by the configurations and methods of the embodiments described above. The embodiments described above may be configured by being selectively combined with one another entirely or in part to enable various modifications. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise.

The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/-reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Mode for Disclosure]

Various embodiments have been described in the best mode for carrying out the disclosure.

[Industrial Applicability]

As described above, the embodiments may be fully or partially applied to the point cloud data transmission/reception device and system.

It will be apparent to those skilled in the art that various changes or modifications may be made to the embodiments within the scope of the embodiments.

Thus, it is intended that the embodiments cover modifications/variations provided they come within the scope of the appended claims and their equivalents.

**Claims**

1. A decoding method comprising:

   receiving a bitstream containing mesh data; and
   decoding the mesh data.

2. The decoding method of claim 1, wherein the decoding of the mesh data comprises:

   decoding a base mesh of the mesh data;
   decoding a displacement vector of the mesh data; and
   decoding an attribute of the mesh data.

3. The decoding method of claim 2, wherein the decoding of the displacement vector comprises:

   inversely transforming a coordinate system of the displacement vector,
   wherein the inversely transforming of the coordinate system comprises:

      generating a normal vector for a vertex of the base mesh; and
      generating a normal vector for a vertex related to subdivision of the base mesh, or
      wherein the inversely transforming of the coordinate system comprises:
      generating a normal vector for a vertex related to subdivision of the base mesh and a normal vector for a vertex of the base mesh.

4. The decoding method of claim 2, wherein the decoding of the displacement vector comprises:

decoding transform coefficients for the displacement vector;
inverse-quantizing the displacement vector; and
inversely transforming the displacement vector.

5. The decoding method of claim 4, wherein the displacement vector is inversely transformed based on a lifting scheme, wherein a displacement vector for a vertex of the mesh data is updated based on a weight related to a level of the mesh data and a weight related to the number of lines connected to the vertex.

6. The decoding method of claim 5, wherein the weight related to the level of the mesh data is generated based on a maximum value of the level,
wherein the weight related to the number of lines connected to the vertex is generated based on a reciprocal of the number of lines connected to the vertex.

7. The decoding method of claim 5, wherein the weight related to the number of lines connected to the vertex is generated based on a reciprocal of the number of times the vertex is used for prediction.

8. The decoding method of claim 5, wherein the displacement vector is updated based on stored information including values related to the weight related to the level of the mesh data and the weight related to the number of lines connected to the vertex.

9. The decoding method of claim 1, wherein the bitstream contains parameter information related to a lifting transform related to the mesh data.

10. A decoding apparatus comprising:

at least one processor; and
at least one memory storing instructions,
wherein, when the instructions are executed by the processor, the decoding apparatus is configured to perform operations comprising:

receiving a bitstream containing mesh data; and
decoding the mesh data.

11. An encoding method comprising:

encoding mesh data; and
transmitting a bitstream containing the mesh data.

12. The encoding method of claim 11, wherein the encoding of the mesh data comprises:

encoding a base mesh of the mesh data;
encoding a displacement vector of the mesh data; and
encoding an attribute of the mesh data.

13. The encoding method of claim 12, wherein the encoding of the displacement vector comprises:

predicting transform coefficients for the displacement vector;
quantizing the transform coefficients for the displacement vector; and
encoding the transform coefficients for the displacement vector based on at least one of a video codec scheme, a zero-run length scheme, or an arithmetic coding scheme.

14. The encoding method of claim 12, wherein the encoding of the displacement vector comprises:

transforming transform coefficients for the displacement vector based on a lifting scheme,
wherein a displacement vector for a vertex of the mesh data is updated based on a weight related to a level of the mesh data and a weight related to the number of lines connected to the vertex.

15. An encoding apparatus comprising:

at least one processor; and
at least one memory storing instructions,
wherein, when the instructions are executed by the processor, the encoding apparatus is configured to perform operations comprising:

encoding mesh data; and
transmitting a bitstream containing the mesh data.

# FIG. 1

# FIG. 2

# FIG. 3

# FIG. 4

original

1st subdivision
result

2nd subdivision
result

# FIG. 5

FIG. 6

EP 4 787 861 A1

FIG.7

EP 4 787 861 A1

# FIG. 8

original

1st subdivision result

2nd subdivision result

LoD$_0$ 

LoD$_1$ 

LoD$_2$ 

P0, P3, P5, P6  P1, P4, P7, P2, P10

LoD$_0$

LoD$_1$

LoD$_2$

LoD$_2$ → Split → LoD$_1$

pred

update

Residual

LoD$_1$'

LoD$_1$' → Split → LoD$_0$'

pred

update

Residual

LoD$_0$''

Prediction process:

$$Signal(v) \leftarrow Signal(v) - \frac{1}{2}\left(Signal(v_1) + Signal(v_2)\right)$$

Update process:

$$Signal(v_1) \leftarrow Signal(v_1) + \frac{1}{8} Signal(v)$$

$$Signal(v_2) \leftarrow Signal(v_2) + \frac{1}{8} Signal(v)$$

$v$  $v_1$  $v_2$

# FIG. 9

Lifting coefficients

n = # of vertex of the subdivied base mesh

| $C_0$ | $C_1$ | $C_2$ | $C_3$ | $C_4$ | $C_5$ | $\cdots$ | $C_{n-3}$ | $C_{n-2}$ | $C_{n-1}$ |

Low frequency(LoD$_0$)　　High frequency

Packing

16 blocks

h blocks

16

16

16

16

$C_0 \rightarrow C_1$　$C_4 \rightarrow C_5$

$C_2 \rightarrow C_3$

⟶ 2D Morton code

# FIG. 10

Input Mesh

Recon. deformed mesh =
Subdivided recon. base mesh + Recon. displacements

Texture Domain    3D Domain        3D Domain    Texture Domain

M'(x, y, z)

M(x, y, z)

P'(u', v')

P(u, v)

Input Attribute map                              Generated Attribute map

FIG. 11

# FIG. 12

Inter frame decoding

Compressed bitstream → DEMUX

Recon. quantized reference base mesh

Motion sub-stream → Motion Decoder → Motion → Reconstruction of base mesh → Recon. quantized base mesh → Inverse Quantization

Recon. base mesh

Displacements sub-stream → Video Decoding → Image Unpacking → Inverse Quantization → Inverse Linear Lifting → Recon. displacements → Reconstruct Deformed mesh → Decoded mesh

Attribute map sub-stream → Video Decoding → Color format/space conversion → Decoded Attribute map

Patch information

# FIG. 13

# FIG. 14

Receiver → Demultiplexer

Motion Vector Bitstream / Base Mesh Bitstream → Motion Vector Decoder / Static Mesh Decoder → Base Mesh Reconstructor → Mesh Reconstructor → Reconstructed Mesh

Displacement Vector Bitstream → Displacement Vector Video Decoder → Displacement Vector Reconstructor

Texture Map Bitstream → Texture Map Video Decoder → Reconstructed Texture Map

Mesh Data Renderer

EP 4 787 861 A1

# FIG. 15

# FIG. 16

```
┌─────────────────────┐        ┌─────────────────────┐                                    ┌─────────────────────┐
│    Displacement     │        │    Displacement     │                                    │    Displacement     │
│ Vector Transformer  │        │ Vector Transformer  │                                    │ Vector Transformer  │
└─────────────────────┘        └─────────────────────┘                                    └─────────────────────┘
          │                              │              ┌─────────────────────┐                      │              ┌─────────────────────┐
          ▼                              ▼              │    Reconstructed    │                      ▼              │    Reconstructed    │
┌─────────────────────┐        ┌─────────────────────┐ │ Displacement Vector │            ┌─────────────────────┐ │ Displacement Vector │
│ Displacement Vector │        │ Displacement Vector │ │      Transform      │            │ Displacement Vector │ │      Transform      │
│ Transform Coefficient│        │ Transform Coefficient│ │     Coefficient     │            │ Transform Coefficient│ │     Coefficient     │
│     Quantizer       │        │     Quantizer       │ │    Level Buffer     │            │     Quantizer       │ │    Level Buffer     │
└─────────────────────┘        └─────────────────────┘ └─────────────────────┘            └─────────────────────┘ └─────────────────────┘
          │                              │                        │                                  │                        │
          ▼                              ▼                        │                                  ▼                        │
┌─────────────────────┐        ┌─────────────────────┐           │                        ┌─────────────────────┐           │
│ Displacement Vector │        │ Displacement Vector │◄──────────┘                        │ Displacement Vector │◄──────────┘
│Transform Coefficient│        │Transform Coefficient│                                    │Transform Coefficient│
│      Packer         │        │  Level Predictor    │                                    │  Level Predictor    │
└─────────────────────┘        └─────────────────────┘                                    └─────────────────────┘
          │                              │                                                          │
          ▼                              ▼                                                          ▼
┌─────────────────────┐        ┌─────────────────────┐                                    ┌─────────────────────┐
│ Displacement Vector │        │ Displacement Vector │                                    │ Displacement Vector │
│     Image/Video     │        │Transform Coefficient│                                    │     Image/Video     │
│      Encoder        │        │Zero-Run Length Encoder│                                   │  Arithmetic Encoder │
└─────────────────────┘        └─────────────────────┘                                    └─────────────────────┘
```

EP 4 787 861 A1

# FIG. 17

| Displacement Vector Transformer |
| Reconstructed Displacement Vector Transform Coefficient Buffer |
| Displacement Vector Transform Coefficient Predictor |
| Displacement Vector Transform Coefficient Quantizer |
| Displacement Vector Transform Coefficient Zero-Run Length Encoder |

| Displacement Vector Transformer |
| Reconstructed Displacement Vector Transform Coefficient Buffer |
| Displacement Vector Transform Coefficient Predictor |
| Displacement Vector Transform Coefficient Quantizer |
| Displacement Vector Transform Coefficient Arithmetic Encoder |

EP 4 787 861 A1

# FIG. 18

# FIG. 19

$\frac{K}{6}*LODWeight$

$\frac{K}{3}*LODWeight$

$\frac{K}{7}*LODWeight$

$v_1$

$v$

valence : 6

valence : 3

valence : 7

Embodiment of Adaptive Lifting Transform Update Process

EP 4 787 861 A1

# FIG. 20

| valence 2 | valence 3 | valence 4 | valence 5 |
|---|---|---|---|
| 0.5 | 0.3333 | 0.25 | 0.2 |
| valence 6 | valence 7 | valence 8 | valence 9 |
| 0.1667 | 0.1429 | 0.125 | 0.1111 |
| valence 10 | valence 11 | valence 12 | valence 13 |
| 0.1 | 0.0909 | 0.0833 | 0.0768 |
| valence 14 | valence 15 | valence 16 | valence 17 |
| 0.0714 | 0.0667 | 0.625 | 0.588 |

Embodiment of tabulating values of
{valenceWeight}

| | valence 2 | valence 3 | valence 4 | valence 5 |
|---|---|---|---|---|
| K = 1.5 | 0.75 | 0.5 | 0.375 | 0.3 |
| | valence 6 | valence 7 | valence 8 | valence 9 |
| K = 1.5 | 0.25 | 0.2143 | 0.1875 | 0.1167 |
| | valence 10 | valence 11 | valence 12 | valence 13 |
| K = 1.5 | 0.15 | 0.1364 | 0.125 | 0.1154 |
| | valence 14 | valence 15 | valence 16 | valence 17 |
| K = 1.5 | 0.1071 | 0.1 | 0.0938 | 0.0882 |

Embodiment of tabulating values of
{K*valenceWeight}

| maxLOD − currentLOD = 1, LODScale = 0.5 | | | | |
|---|---|---|---|---|
| | valence 2 | valence 3 | valence 4 | valence 5 |
| K = 1.5 | 0.375 | 0.25 | 0.1875 | 0.15 |
| | valence 6 | valence 7 | valence 8 | valence 9 |
| K = 1.5 | 0.125 | 0.1071 | 0.0938 | 0.0833 |
| | valence 10 | valence 11 | valence 12 | valence 13 |
| K = 1.5 | 0.075 | 0.0682 | 0.0625 | 0.0577 |
| | valence 14 | valence 15 | valence 16 | valence 17 |
| K = 1.5 | 0.0536 | 0.05 | 0.0469 | 0.0441 |

Embodiment of tabulating values of
{K*LODWeight*valenceWeight}

Embodiment of Tabulating Adaptive Weight Values

EP 4 787 861 A1

# FIG. 21

| valence 2 | valence 3 | valence 4 | valence 5 | valence 6 | valence 7 | valence 8 | valence 9 |
|-----------|-----------|-----------|-----------|-----------|-----------|-----------|-----------|
| 128 | 85 | 64 | 51 | 43 | 37 | 32 | 28 |
| valence 10 | valence 11 | valence 12 | valence 13 | valence 14 | valence 15 | valence 16 | valence 17 |
| 26 | 23 | 21 | 20 | 18 | 17 | 16 | 15 |

Embodiment of Tabulating Integers for Adaptive Weight Values

EP 4 787 861 A1

# FIG. 22

# FIG. 23

Reconstructed Vertex
Information

Reconstructed Vertex
Information

```
Reconstructed
Base Mesh
Normal Calculator
```

```
Reconstructed
Base Mesh
Subdivider
```

```
Reconstructed
Base Mesh
Subdivider
```

```
Subdivided Vertex
Normal Interpolator
```

```
Subdivided Vertex
Normal Calculator
```

# FIG. 24

```
Displacement Vector
Transform Coefficient
Decoder
```
→
```
Displacement Vector
Inverse Quantizer
```
→
```
Displacement Vector
Inverse Transformer
```

# FIG. 25

# FIG. 26

```
vdmc_lifting_transform_parameters(index,  ltpIndex) {
    vdmc_transform_lifting_skip_update_flag[index][ltpIndex]
    vdmc_transform_lod_quantization_flag[index][ltpIndex]
    if (vdmc_transform_lod_quantization_flag[index][ltpIndex] == 0) {
        for (j = 0; j < 3; j++) {
            vdmc_transform_lifting_quantization_parameters[index][ltpIndex][j]
            vdmc_transform_log2_lifting_lod_inverse_scale[index][ltpIndex][j]
        }
        vdmc_transform_log2_lifting_prediction_weight[index][ltpIndex]
    } else {

        . . .

    }
    vdmc_transform_adapdtive_update_flag[index][ltpIndex]
    if (vdmc_transform_adapdtive_update_flag[index][ltpIndex] == 1) {
        vdmc_transform_update_lod_scale[index][ltpIndex]
        vdmc_transform_explicit_update_constant_flag[index][ltpIndex]
        if (vdmc_transform_explicit_update_constant_flag[index][ltpIndex] == 1) {
            vdmc_transform_update_constant[index][ltpIndex]
        }
    } else {
        vdmc_transform_log2_lifting_update_weight[index][ltpIndex]
    }
}
```

# FIG. 27

Encode mesh data — S2700

↓

Transmit bitstream
containing mesh data — S2701

# FIG. 28

Receive bitstream
containing mesh data — S2800

↓

Decode mesh data — S2801

## INTERNATIONAL SEARCH REPORT

| International application No. |
| --- |
| **PCT/KR2024/014650** |

| A. | CLASSIFICATION OF SUBJECT MATTER |
| --- | --- |

**H04N 19/597**(2014.01)i; **H04N 19/60**(2014.01)i; **H04N 19/124**(2014.01)i; **H04N 19/13**(2014.01)i; **H04N 19/184**(2014.01)i

According to International Patent Classification (IPC) or to both national classification and IPC

| B. | FIELDS SEARCHED |
| --- | --- |

Minimum documentation searched (classification system followed by classification symbols)

H04N 19/597(2014.01); G06T 9/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 베이스 메쉬(base mesh), 변위 벡터(displacement vector), 어트리뷰트 (attribute), 세분화(subdivision), 가중치(weight), 리프팅 변환(lifting transform), 파라미터 정보(parameter information)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023-172509 A1 (APPLE INC.) 14 September 2023 (2023-09-14)<br>See paragraphs [0064], [0082] and [0255]-[0256]; and claim 11. | 1-2,9-12,15 |
| Y | | 3-5,13 |
| A | | 6-8,14 |
| Y | 이종석. Video-based Dynamic Mesh Coding 표준화 동향 소개. 방송과 미디어. vol. 28, no. 3, pp. 23-32, July 2023, non-official translation (LEE, Jong Seok. Introduction of Standardization Trend in Video-based Dynamic Mesh Coding. Broadcast and Media Magazine). [Retrieved on 23 December 2024]. Retrieved from <URL: https://www.dbpia.co.kr/journal/articleDetail?nodeId=NODE11485281>.<br>See page 29; and figure 7. | 3-5,13 |
| A | KR 10-2022-0084407 A (SONY GROUP CORPORATION) 21 June 2022 (2022-06-21)<br>See paragraphs [0054]-[0056]. | 1-15 |
| A | KR 10-2022-0126225 A (HYUNDAI MOTOR COMPANY et al.) 15 September 2022 (2022-09-15)<br>See paragraph [0025]. | 1-15 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 January 2025** | **07 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/014650**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2023-0043929 A (TENCENT AMERICA LLC) 31 March 2023 (2023-03-31)<br>See paragraphs [0095]-[0096]. | 1-15 |

Form PCT/ISA/210 (second sheet) (July 2022)

## INTERNATIONAL SEARCH REPORT
### Information on patent family members

International application No.

**PCT/KR2024/014650**

| Patent document cited in search report | | | Publication date (day/month/year) | Patent family member(s) | | | Publication date (day/month/year) |
|---|---|---|---|---|---|---|---|
| WO | 2023-172509 | A1 | 14 September 2023 | EP | 4473489 | A1 | 11 December 2024 |
| | | | | US | 2023-0290008 | A1 | 14 September 2023 |
| | | | | US | 2023-0290009 | A1 | 14 September 2023 |
| | | | | US | 2023-0290010 | A1 | 14 September 2023 |
| | | | | US | 2023-0290011 | A1 | 14 September 2023 |
| | | | | US | 2023-0290063 | A1 | 14 September 2023 |
| | | | | US | 2023-0316655 | A1 | 05 October 2023 |
| | | | | WO | 2023-172457 | A1 | 14 September 2023 |
| KR | 10-2022-0084407 | A | 21 June 2022 | CN | 113939849 | A | 14 January 2022 |
| | | | | EP | 4052471 | A1 | 07 September 2022 |
| | | | | JP | 2022-542419 | A | 03 October 2022 |
| | | | | JP | 7303992 | B2 | 06 July 2023 |
| | | | | US | 11348285 | B2 | 31 May 2022 |
| | | | | US | 2021-0174551 | A1 | 10 June 2021 |
| | | | | WO | 2021-116838 | A1 | 17 June 2021 |
| KR | 10-2022-0126225 | A | 15 September 2022 | CN | 116965034 | A | 27 October 2023 |
| | | | | US | 2023-0410374 | A1 | 21 December 2023 |
| | | | | WO | 2022-191543 | A1 | 15 September 2022 |
| KR | 10-2023-0043929 | A | 31 March 2023 | CN | 116635904 | A | 22 August 2023 |
| | | | | EP | 4182890 | A1 | 24 May 2023 |
| | | | | EP | 4182890 | A4 | 04 September 2024 |
| | | | | JP | 2023-547173 | A | 09 November 2023 |
| | | | | JP | 7544973 | B2 | 03 September 2024 |
| | | | | US | 2023-0014820 | A1 | 19 January 2023 |
| | | | | WO | 2023-004241 | A1 | 26 January 2023 |

Form PCT/ISA/210 (patent family annex) (July 2022)